(19)

Europäisches Patentamt
European Patent Office
Office européen des brevets

(11) **EP 3 845 592 A1**

(12) **EUROPEAN PATENT APPLICATION**
published in accordance with Art. 153(4) EPC

(43) Date of publication:
07.07.2021 Bulletin 2021/27

(21) Application number: 19854317.5

(22) Date of filing: 31.07.2019

(51) Int Cl.:
C08L 23/26 $^{(2006.01)}$     C08G 59/42 $^{(2006.01)}$
C08K 3/28 $^{(2006.01)}$     C08K 5/17 $^{(2006.01)}$
C08K 5/29 $^{(2006.01)}$

(86) International application number:
PCT/JP2019/029922

(87) International publication number:
WO 2020/044920 (05.03.2020 Gazette 2020/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 29.08.2018 JP 2018160853

(71) Applicant: SUMITOMO CHEMICAL COMPANY
LIMITED
Chuo-ku
Tokyo 104-8260 (JP)

(72) Inventors:
• OKADA, Yoshinori
Osaka-shi, Osaka 554-8558 (JP)
• NAKAJIMA, Hideto
Niihama-shi, Ehime 792-0015 (JP)

(74) Representative: Winter, Brandl - Partnerschaft
mbB
Alois-Steinecker-Straße 22
85354 Freising (DE)

(54) **AQUEOUS DISPERSION**

(57)     The present invention provides an aqueous dispersion containing the following component (A) and component (B): (A) a polyolefin modified with an $\alpha,\beta$-unsaturated carboxylic acid and/or a derivative thereof, having a weight-average molecular weight of not less than 100,000, a crystallinity degree larger than 10%, and an acid value of 1 - 30 mg KOH/g, and (B) a polyolefin modified with an $\alpha,\beta$-unsaturated carboxylic acid and/or a derivative thereof, having a weight-average molecular weight of less than 100,000, and an acid value of 15 - 50 mg KOH/g, the dispersion having a mass ratio of a content of component (A) and a content of component (B) (content of component (A)/content of component (B)) of 55/45 - 95/5.

EP 3 845 592 A1

**Description**

[Technical Field]

The present invention relates to aqueous dispersions.

[Background Art]

Polyolefins are used in various fields such as household electric appliance, automobile and the like, since they are superior in mechanical properties, chemical resistance, and the like. However, ordinary adhesives have insufficient adhesiveness to non-polar polyolefins. Therefore, various studies have been conducted to obtain an adhesive (particularly an aqueous dispersion) having good adhesiveness to polyolefins.

For example, patent document 1 discloses an aqueous dispersion containing (A) a polyolefin highly modified by $\alpha,\beta$-unsaturated carboxylic acid, (B) a polyolefin low-modified by an $\alpha,\beta$-unsaturated carboxylic acid (B-2), and (C) a basic compound.

Patent document 2 discloses an aqueous dispersion containing a carboxy group-containing modified propylene/1-butene/ethylene copolymer (A), an acid-modified polyolefin (B), an anionic surfactant (C), and an alkali component (D).

Patent document 3 discloses a production method of an aqueous dispersion, including addition-polymerization of a mixture of an polyolefin (A) having a weight-average molecular weight of 10,000 - 100,000, an polyolefin (B) having a weight-average molecular weight of 150,000 - 500,000, and an unsaturated carboxylic acid (C) at a graft ratio of 2 - 20% to prepare a modified polyolefin, and dispersing the obtained modified polyolefin in water.

[Document List]

[Patent documents]

patent document 1: WO 2017/195828
patent document 2: JP-A-2008-303297
patent document 3: JP-A-2011-148871

[Summary of Invention]

[Technical Problem]

Various aqueous dispersions superior in adhesiveness to polyolefins have so far been proposed. However, further improvements in the adhesiveness have been constantly demanded in the field of aqueous dispersions. In addition, since car components are exposed to high temperatures, the aqueous dispersion used to adhere polyolefin car components is required to exhibit superior adhesiveness to polyolefins even at high temperatures.

The present invention has been made taking note of the above-mentioned situation, and aims to provide an aqueous dispersion superior in the adhesiveness to polyolefin (particularly adhesiveness at high temperatures).

[Solution to Problem]

The present invention capable of achieving the above-mentioned purpose provides the following.

[1] An aqueous dispersion comprising the following component (A) and component (B):

(A) a polyolefin modified with an $\alpha,\beta$-unsaturated carboxylic acid and/or a derivative thereof, having a weight-average molecular weight of not less than 100,000, a crystallinity degree larger than 10%, and an acid value of 1 - 30 mg KOH/g, and
(B) a polyolefin modified with an $\alpha,\beta$-unsaturated carboxylic acid and/or a derivative thereof, having a weight-average molecular weight of less than 100,000, and an acid value of 15 - 50 mg KOH/g,
the dispersion having a mass ratio of a content of the component (A) and a content of the component (B) (content of the component (A)/content of the component (B)) of 55/45 - 95/5.

[2] The aqueous dispersion of the aforementioned [1], wherein the component (A) comprises a polyolefin modified with maleic anhydride and an alkyl (meth)acrylate having an alkyl group having 1 - 18 carbon atoms and/or a cycloalkyl (meth)acrylate having a cycloalkyl group having 3 - 18 carbon atoms, and/or a polyolefin modified with maleic anhydride.

[3] The aqueous dispersion of the aforementioned [2], wherein the alkyl (meth)acrylate having an alkyl group having 1 - 18 carbon atoms and/or the cycloalkyl (meth)acrylate having a cycloalkyl group having 3 - 18 carbon atoms are/is at least one selected from the group consisting of butyl (meth)acrylate, hexyl (meth)acrylate, octyl (meth)acrylate, 2-ethylhexyl (meth)acrylate, dodecyl (meth)acrylate and tridecyl (meth)acrylate, preferably at least one selected from the group consisting of butyl acrylate, 2-ethylhexyl acrylate and dodecyl acrylate, more preferably butyl acrylate or 2-ethylhexyl acrylate.

[4] The aqueous dispersion of any one of the aforementioned [1] to [3], wherein the component (B) comprises a polyolefin modified with maleic anhydride and an alkyl (meth)acrylate having an alkyl group having 1 - 18 carbon atoms and/or a cycloalkyl (meth)acrylate having a cycloalkyl group having 3 - 18 carbon atoms, and/or a polyolefin modified with maleic anhydride.

[5] The aqueous dispersion of the aforementioned [4], wherein the alkyl (meth)acrylate having an alkyl group having 1 - 18 carbon atoms and/or the cycloalkyl (meth)acrylate having a cycloalkyl group having 3 - 18 carbon atoms are/is at least one selected from the group consisting of butyl (meth)acrylate, hexyl (meth)acrylate, octyl (meth)acrylate, 2-ethylhexyl (meth)acrylate, dodecyl (meth)acrylate and tridecyl (meth)acrylate, preferably at least one selected from the group consisting of butyl acrylate, 2-ethylhexyl acrylate and dodecyl acrylate, more preferably 2-ethylhexyl acrylate or dodecyl acrylate.

[6] The aqueous dispersion of any one of the aforementioned [1] to [5], wherein the component (A) has a melting point of not less than 50°C.

[7] The aqueous dispersion of any one of the aforementioned [1] to [6], wherein the component (A) has a melting point of not more than 140°C, preferably not more than 110°C, more preferably not more than 90°C.

[8] The aqueous dispersion of any one of the aforementioned [1] to [7], wherein the component (A) has a weight-average molecular weight of not less than 150,000.

[9] The aqueous dispersion of any one of the aforementioned [1] to [8], wherein the component (A) has a weight-average molecular weight of not more than 300,000, preferably not more than 250,000.

[10] The aqueous dispersion of any one of the aforementioned [1] to [9], wherein the component (A) has a crystallinity degree of not less than 12%, preferably not less than 20%.

[11] The aqueous dispersion of any one of the aforementioned [1] to [10], wherein the component (A) has a crystallinity degree of not more than 60%, preferably not more than 40%.

[12] The aqueous dispersion of any one of the aforementioned [1] to [11], wherein the component (A) has an acid value of not less than 3 mg KOH/g, preferably not less than 5 mg KOH/g.

[13] The aqueous dispersion of any one of the aforementioned [1] to [12], wherein the component (A) has an acid value of not more than 25 mg KOH/g, preferably not more than 20 mg KOH/g.

[14] The aqueous dispersion of any one of the aforementioned [1] to [13], wherein the component (B) has a melting point of not less than 50°C, preferably not less than 70°C.

[15] The aqueous dispersion of any one of the aforementioned [1] to [14], wherein the component (B) has a melting point of not more than 140°C, preferably not more than 100°C, more preferably not more than 90°C.

[16] The aqueous dispersion of any one of the aforementioned [1] to [15], wherein the component (B) has a weight-average molecular weight of not less than 10,000, preferably not less than 40,000.

[17] The aqueous dispersion of any one of the aforementioned [1] to [16], wherein the component (B) has a weight-average molecular weight of not more than 80,000, preferably not more than 60,000.

[18] The aqueous dispersion of any one of the aforementioned [1] to [17], wherein the component (B) has a crystallinity degree of not less than 1%, preferably not less than 10%, more preferably not less than 20%.

[19] The aqueous dispersion of any one of the aforementioned [1] to [18], wherein the component (B) has a crystallinity degree of not more than 60%, preferably not more than 40%.

[20] The aqueous dispersion of any one of the aforementioned [1] to [19], wherein the component (B) has an acid value of not less than 20 mg KOH/g, preferably not less than 23 mg KOH/g.

[21] The aqueous dispersion of any one of the aforementioned [1] to [20], wherein the component (B) has an acid value of not more than 40 mg KOH/g, preferably not more than 35 mg KOH/g.

[22] The aqueous dispersion of any one of the aforementioned [1] to [21], wherein the mass ratio of the content of the component (A) and the content of the component (B) is not less than 60/40, preferably not less than 70/30.

[23] The aqueous dispersion of any one of the aforementioned [1] to [22], wherein the mass ratio of the content of the component (A) and the content of the component (B) is not more than 90/10, preferably not more than 85/15, more preferably not more than 80/20.

[24] The aqueous dispersion of any one of the aforementioned [1] to [23], wherein a total content of the component (A) and component (B) is not less than 1 wt%, preferably not less than 5 wt%, more preferably not less than 20 wt%, based on the whole aqueous dispersion.

[25] The aqueous dispersion of any one of the aforementioned [1] to [24], wherein a total content of the component (A) and component (B) is not more than 40 wt%, preferably not more than 35 wt%, based on the whole aqueous dispersion.

[26] The aqueous dispersion of any one of the aforementioned [1] to [25], further comprising a basic compound.

[27] The aqueous dispersion of the aforementioned [26], wherein the basic compound is ammonia and/or an amine.

[28] The aqueous dispersion of the aforementioned [26] or [27], wherein a content of the basic compound is not less than 1 part by weight, preferably not less than 3 parts by weight, more preferably not less than 5 parts by weight, per total 100 parts by weight of the component (A) and component (B).

[29] The aqueous dispersion of any one of the aforementioned [26] to [28], wherein the content of the basic compound is not more than 20 parts by weight, preferably not more than 15 parts by weight, more preferably not more than 10 parts by weight, per total 100 parts by weight of the component (A) and component (B).

[30] The aqueous dispersion of any one of the aforementioned [1] to [29], further comprising a crosslinking agent.

[31] The aqueous dispersion of the aforementioned [30], wherein the crosslinking agent is at least one selected from the group consisting of an isocyanate crosslinking agent, a carbodiimide crosslinking agent and an epoxy crosslinking agent.

[32] The aqueous dispersion of the aforementioned [30] or [31], wherein a content of the crosslinking agent is 1 - 30 parts by weight per 100 parts by weight of the non-volatile content of the aqueous dispersion.

[33] The aqueous dispersion of the aforementioned [32], wherein a content of the crosslinking agent is not less than 2 parts by weight, preferably not less than 5 parts by weight, per 100 parts by weight of the non-volatile content of the aqueous dispersion.

[34] The aqueous dispersion of the aforementioned [32] or [33], wherein a content of the crosslinking agent is not more than 20 parts by weight, preferably not more than 15 parts by weight, per 100 parts by weight of the non-volatile content of the aqueous dispersion.

[35] The aqueous dispersion of any one of the aforementioned [1] to [34], optionally further comprising an emulsifier, wherein a content of the emulsifier is 0 - 8 parts by weight per total 100 parts by weight of the component (A) and component (B).

[36] The aqueous dispersion of the aforementioned [35], wherein a content of the emulsifier is not more than 1 part by weight, preferably not more than 0.5 parts by weight.

[37] The aqueous dispersion of any one of the aforementioned [1] to [36], wherein a dispersoid in the aqueous dispersion has a volume-based median size of 0.03 - 10 $\mu$m.

[38] The aqueous dispersion of the aforementioned [37], wherein the volume-based median size of the dispersoid in the aqueous dispersion is not more than 1 $\mu$m, preferably not more than 0.4 $\mu$m.

[39] The aqueous dispersion of any one of the aforementioned [1] to [38], wherein the polyolefin which is a basic skeleton of the component (A) is an ethylene-propylene copolymer and/or a propylene-1-butene copolymer, preferably an ethylene-propylene copolymer or a propylene-1-butene copolymer.

[40] The aqueous dispersion of any one of the aforementioned [1] to [39], wherein the polyolefin which is a basic skeleton of the component (B) is an ethylene-propylene copolymer and/or an ethylene-propylene-1-butene copolymer, preferably an ethylene-propylene copolymer or an ethylene-propylene-1-butene copolymer, more preferably an ethylene-propylene copolymer.

[41] The aqueous dispersion of any one of the aforementioned [1] to [40], further comprising an unmodified polyolefin in a content of 0.1 - 20 parts by weight per total 100 parts by weight of the component (A) and component (B).

[42] The aqueous dispersion of the aforementioned [41], wherein the content of the unmodified polyolefin is not less than 1 part by weight, preferably not less than 2 parts by weight, per total 100 parts by weight of the component (A) and component (B) .

[43] The aqueous dispersion of the aforementioned [41] or [42], wherein the content of the unmodified polyolefin is not more than 15 parts by weight, preferably not more than 10 parts by weight, per total 100 parts by weight of the component (A) and component (B).

[44] The aqueous dispersion of any one of the aforementioned [41] to [43], wherein the unmodified polyolefin is at least one selected from the group consisting of propylene homopolymer, ethylene-propylene copolymer, propylene-1-butene copolymer and ethylene-propylene-1-butene copolymer, preferably at least one selected from the group consisting of propylene homopolymer, ethylene-propylene copolymer and propylene-1-butene copolymer, more preferably propylene homopolymer, ethylene-propylene copolymer, propylene-1-butene copolymer or ethylene-propylene-1-butene copolymer, further preferably propylene homopolymer, ethylene-propylene copolymer or propylene-1-butene copolymer, particularly preferably propylene homopolymer.

[45] An aqueous adhesive comprising the aqueous dispersion of any one of the aforementioned [1] to [44].

[46] A coated film formed from the aqueous dispersion of any one of the aforementioned [1] to [44] or the aqueous adhesive of the aforementioned [45].

[47] A laminate comprising the first substrate, the coated film of the aforementioned [46], and the second substrate laminated in this order.

[48] The laminate of the aforementioned [47], wherein the first substrate is a polyolefin.

[Advantageous Effects of Invention]

According to the present invention, an aqueous dispersion superior in the adhesiveness (particularly adhesiveness at high temperatures) to polyolefin can be obtained.

[Description of Embodiments]

The present invention is successively described in the following. The examples, preferred descriptions and the like described below can be combined as long as they do not contradict each other.

The present invention relates to an aqueous dispersion containing water. The aqueous dispersion here means a mixture in which the dispersoid is dispersed in water. However, the aqueous dispersion of the present invention may contain an organic solvent as a dispersion medium. The shape of the dispersoid is not particularly limited, and the dispersoid may be solid, liquid, or both of these.

One of the characteristics of the aqueous dispersion of the present invention is that it contains the following component (A) and component (B):

(A) a polyolefin modified with an $\alpha,\beta$-unsaturated carboxylic acid and/or a derivative thereof, having a weight-average molecular weight of not less than 100,000, a crystallinity degree larger than 10%, and an acid value of 1 - 30 mg KOH/g, and

(B) a polyolefin modified with an $\alpha,\beta$-unsaturated carboxylic acid and/or a derivative thereof, having a weight-average molecular weight of less than 100,000, and an acid value of 15 - 50 mg KOH/g.

In the present invention, a polyolefin means a homopolymer or copolymer having a constitutional unit derived from an olefin (hereinafter sometimes to be abbreviated as "olefin unit"). Polyolefins, which are copolymers, may have units derived from other monomers different from olefin. However, in the present invention, a copolymer having an olefin unit amount of not less than 50 mol% of all the constitutional units is classified as a polyolefin, and a copolymer having an olefin unit amount less than this is not classified as a polyolefin.

Component (A) is a high-molecular weight modified polyolefin having a weight-average molecular weight of not less than 100,000. Such high-molecular weight modified polyolefins have poor dispersibility in water, and production of an aqueous dispersion containing same generally requires use of an emulsifier. However, the present inventors have conducted intensive studies and found that an aqueous dispersion can be obtained without using an emulsifier but by using a low-molecular weight modified polyolefin having a weight-average molecular weight of less than 100,000 (i.e., component (B)) together with a high-molecular weight modified polyolefin having a weight-average molecular weight of not less than 100,000 (i.e., component (A)).

As described above, by using component (A) and component (B) in combination, it is not necessary to use an emulsifier in the present invention. The aqueous dispersion of the present invention may contain an emulsifier.

The content of the emulsifier in the aqueous dispersion is, from the aspects of adhesiveness (particularly adhesiveness to adherend at high temperatures) of the aqueous dispersion, preferably not more than 8 parts by weight, more preferably not more than 1 part by weight, further preferably not more than 0.5 parts by weight, per total 100 parts by weight of component (A) and component (B). The aqueous dispersion does not need to contain an emulsifier, and the lower limit of the content of the emulsifier in the aqueous dispersion is 0.

In the present invention, the "emulsifier" means a surfactant having an action of emulsifying a polyolefin modified with an $\alpha,\beta$-unsaturated carboxylic acid and/or a derivative thereof, having a weight-average molecular weight of not less than 100,000, a crystallinity degree larger than 10%, and an acid value of 1 - 30 mg KOH/g (i.e., component (A)). The "emulsifier" in the present invention does not include a polyolefin modified with an $\alpha,\beta$-unsaturated carboxylic acid and/or a derivative thereof, having a weight-average molecular weight of less than 100,000, and an acid value of 15 - 50 mg KOH/g (i.e., component (B)).

The emulsifier may be any of an anionic emulsifier, a cationic emulsifier, an ampholytic emulsifier, and a nonionic emulsifier. These emulsifiers may be used in combination.

Examples of the anionic emulsifier include sulfuric acid ester salt of higher alcohol, higher alkylsulfonic acid salt, higher carboxylic acid salt, alkylbenzenesulfonic acid salt, polyoxyethylene alkylsulfate salt, polyoxyethylene alkyl phenyl ether sulfate salt, vinylsulfosuccinate and the like.

Examples of the cationic emulsifier include alkylammonium salt (e.g., dodecyltrimethylammonium salt, cetyltrimethylammonium salt), alkylpyridinium salt (e.g., cetylpyridinium salt, decylpyridinium salt), oxyalkylenetrialkylammonium salt, dioxyalkylenedialkylammonium salt, allyltrialkylammonium salt, diallyldialkylammonium salt and the like.

Examples of the ampholytic emulsifier include lauryl betaine, lauryldimethylamine oxide and the like.

Examples of the nonionic emulsifier include compounds having a polyoxyethylene structure, such as polyoxyethylene alkyl ether (e.g., polyoxyethylene propylene ether), polyoxyethylene alkyl phenyl ether, polyethylene glycol fatty acid ester, ethylene oxide-propylene oxide block copolymer, polyoxyethylene fatty acid amide, ethylene oxide-propylene oxide copolymer and the like, sorbitan derivatives such as polyoxyethylene sorbitan fatty acid ester and the like, and the like.

Specific examples of the emulsifier include LATEMUL E-1000A manufactured by Kao Corporation, NOIGEN EA-177 manufactured by DKS Co. Ltd., and the like.

The weight-average molecular weight of component (A) is not less than 100,000. When the weight-average molecular weight is less than 100,000, the intermolecular cohesive force between components (A) becomes small, and the adhesiveness (particularly, adhesiveness to adherend at high temperatures) of the aqueous dispersion becomes insufficient. The weight-average molecular weight of component (A) is preferably not less than 150,000, preferably not more than 300,000, more preferably not more than 250,000. The value of the weight average molecular weight is a value measured by gel permeation chromatography (GPC) using polystyrene as the standard, as described in the below-mentioned Examples. The same applies to the weight average molecular weight of component (B) and the like.

The weight-average molecular weight of component (B) is less than 100,000. When the weight-average molecular weight is not less than 100,000, a stable aqueous dispersion cannot be obtained. The weight-average molecular weight of component (B) is preferably not less than 10,000, more preferably not less than 40,000, preferably not more than 80,000, more preferably not more than 60,000.

One of the characteristics of the present invention is that the mass ratio of the content of component (A) and the content of component (B) (content of component (A)/content of component (B), hereinafter sometimes to be abbreviated as "component (A)/component (B)") is adjusted to a specific range. The thus-adjusted aqueous dispersion of the present invention can exhibit superior adhesiveness to polyolefin (particularly, adhesiveness at high temperatures).

The component (A)/component (B) is 55/45 - 95/5. When the content of component (A) is small and component (A)/component (B) is smaller than 55/45, the intermolecular cohesive force between components (A) becomes small, and the adhesiveness (particularly adhesiveness to adherend at high temperatures) of the aqueous dispersion becomes insufficient. On the other hand, when the content of component (A) is high and component (A)/component (B) is higher than 95/5, a stable aqueous dispersion cannot be obtained. The component (A)/component (B) is preferably not less than 60/40, more preferably not less than 70/30, preferably not more than 90/10, more preferably not more than 85/15, further preferably not more than 80/20.

The total content of component (A) and component (B) is preferably not less than 1 wt%, more preferably not less than 5 wt%, further preferably not less than 20 wt%, preferably not more than 40 wt%, more preferably not more than 35 wt%, based on the whole aqueous dispersion, from the aspects of the physical stability of the aqueous dispersion and adhesiveness to adherend.

The component (A) and component (B) are both polyolefins modified with an $\alpha,\beta$-unsaturated carboxylic acid and/or a derivative thereof. Only one kind of an $\alpha,\beta$-unsaturated carboxylic acid and/or a derivative thereof may be used, or two or more kinds thereof may be used in combination.

The "polyolefin modified with an $\alpha,\beta$-unsaturated carboxylic acid and/or a derivative thereof" means a polyolefin having a constitutional unit derived from an $\alpha,\beta$-unsaturated carboxylic acid and/or a derivative thereof. A polyolefin modified with an $\alpha,\beta$-unsaturated carboxylic acid anhydride, which is one kind of an $\alpha,\beta$-unsaturated carboxylic acid derivative, may have an acid anhydride structure (-CO-O-CO-), or a structure obtained by hydrolysis thereof (i.e., structure with two carboxy groups or salts thereof), or have both of these structures. The same applies to a polyolefin modified with an $\alpha,\beta$-unsaturated carboxylic acid ester, and the like.

Examples of the $\alpha,\beta$-unsaturated carboxylic acid include (meth)acrylic acid, fumaric acid, maleic acid, itaconic acid, crotonic acid, citraconic acid and the like. In the present invention, acrylic acid and methacrylic acid are generically referred to as (meth)acrylic acid. Other descriptions also mean the same.

Examples of the derivative of an $\alpha,\beta$-unsaturated carboxylic acid include ester, acid anhydride, amide, imide and the like.

Examples of the $\alpha,\beta$-unsaturated carboxylic acid ester include methyl maleate, methyl itaconate, methyl citraconate, methyl (meth)acrylate, ethyl (meth)acrylate, propyl (meth)acrylate, butyl (meth)acrylate, glycidyl (meth)acrylate, 2-hydroxyethyl (meth)acrylate, 2-hydroxypropyl (meth)acrylate, 4-hydroxybutyl (meth)acrylate, (2-isocyanato)ethyl (meth)acrylate, (dimethylamino)(meth)acrylate, (meth)acrylamide, cyclopentyl (meth)acrylate, hexyl (meth)acrylate, cyclohexyl (meth)acrylate, octyl (meth)acrylate, 2-ethylhexyl (meth)acrylate, isobornyl (meth)acrylate, dodecyl (meth)acrylate, tridecyl (meth)acrylate, stearyl (meth)acrylate and the like.

Among the $\alpha,\beta$-unsaturated carboxylic acid esters, an alkyl (meth)acrylate having an alkyl group having 1 - 18 carbon atoms and a cycloalkyl (meth)acrylate having a cycloalkyl group having 3 - 18 carbon atoms are preferable. Only one kind of these may be used, or two or more kinds thereof may be used in combination.

Examples of the alkyl (meth)acrylate having an alkyl group having 1 - 18 carbon atoms include methyl (meth)acrylate, ethyl (meth)acrylate, propyl (meth)acrylate, butyl (meth)acrylate, hexyl (meth)acrylate, octyl (meth)acrylate, 2-ethylhexyl (meth)acrylate, dodecyl (meth)acrylate, tridecyl (meth)acrylate, stearyl (meth)acrylate and the like.

Examples of the cycloalkyl (meth)acrylate having a cycloalkyl group having 3 - 18 carbon atoms include cyclopentyl (meth)acrylate, cyclohexyl (meth)acrylate, isobornyl (meth)acrylate and the like.

Examples of the $\alpha,\beta$-unsaturated carboxylic acid anhydride include maleic anhydride, itaconic anhydride, citraconic anhydride and the like.

Examples of the $\alpha,\beta$-unsaturated carboxylic acid amide and imide include (meth)acrylic acid amide, maleic acid monoamide, maleimide and the like.

In one embodiment of the present invention, component (A) preferably contains a polyolefin modified with an $\alpha,\beta$-unsaturated carboxylic acid anhydride and an $\alpha,\beta$-unsaturated carboxylic acid ester, and/or a polyolefin modified with an $\alpha,\beta$-unsaturated carboxylic acid anhydride, more preferably consists of a polyolefin modified with an $\alpha,\beta$-unsaturated carboxylic acid anhydride and an $\alpha,\beta$-unsaturated carboxylic acid ester, and/or a polyolefin modified with an $\alpha,\beta$-unsaturated carboxylic acid anhydride. In this embodiment, the $\alpha,\beta$-unsaturated carboxylic acid anhydride is preferably maleic anhydride. In this embodiment, the $\alpha,\beta$-unsaturated carboxylic acid ester is preferably an alkyl (meth)acrylate having an alkyl group having 1 - 18 carbon atoms and/or an cycloalkyl (meth)acrylate having a cycloalkyl group having 3 - 18 carbon atoms, more preferably at least one selected from the group consisting of butyl (meth)acrylate, hexyl (meth)acrylate, octyl (meth)acrylate, 2-ethylhexyl (meth)acrylate, dodecyl (meth)acrylate and tridecyl (meth)acrylate, further preferably at least one selected from the group consisting of butyl acrylate, 2-ethylhexyl acrylate and dodecyl acrylate, particularly preferably butyl acrylate or 2-ethylhexyl acrylate.

In one embodiment of the present invention, component (A) preferably contains a polyolefin modified with an $\alpha,\beta$-unsaturated carboxylic acid anhydride and an $\alpha,\beta$-unsaturated carboxylic acid ester, more preferably consists of a polyolefin modified with an $\alpha,\beta$-unsaturated carboxylic acid anhydride and an $\alpha,\beta$-unsaturated carboxylic acid ester. In this embodiment, the $\alpha,\beta$-unsaturated carboxylic acid anhydride is preferably maleic anhydride. In this embodiment, the $\alpha,\beta$-unsaturated carboxylic acid ester is preferably an alkyl (meth)acrylate having an alkyl group having 1 - 18 carbon atoms and/or a cycloalkyl (meth)acrylate having a cycloalkyl group having 3 - 18 carbon atoms, more preferably at least one selected from the group consisting of butyl (meth)acrylate, hexyl (meth)acrylate, octyl (meth)acrylate, 2-ethylhexyl (meth)acrylate, dodecyl (meth)acrylate and tridecyl (meth)acrylate, further preferably at least one selected from the group consisting of butyl acrylate, 2-ethylhexyl acrylate and dodecyl acrylate, particularly preferably butyl acrylate or 2-ethylhexyl acrylate.

In component (A) containing a constitutional unit derived from an $\alpha,\beta$-unsaturated carboxylic acid anhydride (particularly, maleic anhydride) (hereinafter indicated as "anhydride unit") and a constitutional unit derived from an $\alpha,\beta$-unsaturated carboxylic acid ester (particularly, butyl acrylate or 2-ethylhexyl acrylate) (hereinafter indicated as "ester unit"), the molar ratio of the amount of the anhydride unit and the amount of the ester unit (anhydride unit amount/ester unit amount) is preferably not less than 0.50, more preferably not less than 0.67, further preferably not less than 0.83, preferably not more than 2.00, more preferably not more than 1.50, further preferably not more than 1.25, to perform good modification of a polyolefin with an $\alpha,\beta$-unsaturated carboxylic acid anhydride and an $\alpha,\beta$-unsaturated carboxylic acid ester.

In one embodiment of the present invention, component (B) preferably contains a polyolefin modified with an $\alpha,\beta$-unsaturated carboxylic acid anhydride and an $\alpha,\beta$-unsaturated carboxylic acid ester, and/or a polyolefin modified with an $\alpha,\beta$-unsaturated carboxylic acid anhydride, more preferably consists of a polyolefin modified with an $\alpha,\beta$-unsaturated carboxylic acid anhydride and an $\alpha,\beta$-unsaturated carboxylic acid ester, and/or a polyolefin modified with an $\alpha,\beta$-unsaturated carboxylic acid anhydride. In this embodiment, the $\alpha,\beta$-unsaturated carboxylic acid anhydride is preferably maleic anhydride. In this embodiment, the $\alpha,\beta$-unsaturated carboxylic acid ester is preferably an alkyl (meth)acrylate having an alkyl group having 1 - 18 carbon atoms and/or a cycloalkyl (meth)acrylate having a cycloalkyl group having 3 - 18 carbon atoms, more preferably at least one selected from the group consisting of butyl (meth)acrylate, hexyl (meth)acrylate, octyl (meth)acrylate, 2-ethylhexyl (meth)acrylate, dodecyl (meth)acrylate and tridecyl (meth)acrylate, further preferably at least one selected from the group consisting of butyl acrylate, 2-ethylhexyl acrylate and dodecyl acrylate, particularly preferably 2-ethylhexyl acrylate or dodecyl acrylate.

In one embodiment of the present invention, component (B) preferably contains a polyolefin modified with an $\alpha,\beta$-unsaturated carboxylic acid anhydride and an $\alpha,\beta$-unsaturated carboxylic acid ester, more preferably consists of a polyolefin modified with an $\alpha,\beta$-unsaturated carboxylic acid anhydride and an $\alpha,\beta$-unsaturated carboxylic acid ester. In this embodiment, the $\alpha,\beta$-unsaturated carboxylic acid anhydride is preferably maleic anhydride. In this embodiment, the $\alpha,\beta$-unsaturated carboxylic acid ester is preferably an alkyl (meth)acrylate having an alkyl group having 1 - 18 carbon atoms and/or a cycloalkyl (meth)acrylate having a cycloalkyl group having 3 - 18 carbon atoms, more preferably at least one selected from the group consisting of butyl (meth)acrylate, hexyl (meth)acrylate, octyl (meth)acrylate, 2-ethylhexyl (meth)acrylate, dodecyl (meth)acrylate and tridecyl (meth)acrylate, further preferably at least one selected from the group consisting of butyl acrylate, 2-ethylhexyl acrylate and dodecyl acrylate, particularly preferably 2-ethylhexyl acrylate or dodecyl acrylate.

In component (B) containing a constitutional unit derived from an α,β-unsaturated carboxylic acid anhydride (particularly, maleic anhydride) (hereinafter indicated as "anhydride unit") and a constitutional unit derived from an α,β-unsaturated carboxylic acid ester (particularly, 2-ethylhexyl acrylate dodecyl acrylate) (hereinafter indicated as "ester unit"), the molar ratio of the amount of the anhydride unit and the amount of the ester unit (anhydride unit amount/ester unit amount) is preferably not less than 0.50, more preferably not less than 0.67, further preferably not less than 0.83, preferably not more than 2.00, more preferably not more than 1.50, further preferably not more than 1.25, to perform good modification of a polyolefin with an α,β-unsaturated carboxylic acid anhydride and an α,β-unsaturated carboxylic acid ester.

The acid value of component (A) is 1 - 30 mg KOH/g. When the acid value is less than 1 mg KOH/g, a stable aqueous dispersion cannot be obtained. When the acid value exceeds 30 mg KOH/g, the adhesiveness of the aqueous dispersion to polyolefin decreases. The acid value is preferably not less than 3 mg KOH/g, more preferably not less than 5 mg KOH/g, preferably not more than 25 mg KOH/g, more preferably not more than 20 mg KOH/g. The value of the acid value is a value calculated by titration, as described in the below-mentioned Examples. The same applies to the acid value of component (B) and the like.

The acid value of component (B) is 15 - 50 mg KOH/g from the aspects of the dispersibility of the aqueous dispersion and adhesiveness to polyolefin. The acid value is preferably not less than 20 mg KOH/g, more preferably not less than 23 mg KOH/g, preferably not more than 40 mg KOH/g, more preferably not more than 35 mg KOH/g.

In the present invention, the crystallinity degree of component (A) needs to be more than 10%. When the crystallinity degree is less than 10%, the adhesiveness (particularly adhesiveness to adherend at high temperatures) of the aqueous dispersion becomes insufficient. The crystallinity degree is preferably not less than 12%, more preferably not less than 20%. While the upper limit of the crystallinity degree of component (A) is not particularly set, the crystallinity degree is preferably not more than 60%, more preferably not more than 40% from the aspect of the dispersibility of the aqueous dispersion. The crystallinity degree of modified polyolefin such as component (A), component (B) or the like is a value obtained by measurement using a wide-angle X-ray diffractometer, as described in the below-mentioned Examples.

The crystallinity degree of component (B) is preferably not less than 1%, more preferably not less than 10%, further preferably not less than 20%, preferably not more than 60%, more preferably not more than 40%, from the aspects of the adhesiveness (particularly adhesiveness to adherend at high temperatures) and dispersibility of the aqueous dispersion.

The melting point of component (A) is preferably not less than 50°C, preferably not more than 140°C, more preferably not more than 110°C, further preferably not more than 90°C, from the aspects of the adhesiveness (particularly adhesiveness to adherend at high temperatures) of the aqueous dispersion and ease of melting when adhering with a hot press. The value of the melting point is a value obtained by measurement using a differential scanning calorimeter, as described in the below-mentioned Examples. The same applies to the melting point of component (B) or the like.

The melting point of component (B) is preferably not less than 50°C, more preferably not less than 70°C, preferably not more than 140°C, more preferably not more than 100°C, further preferably not more than 90°C, from the aspects of the adhesiveness (particularly adhesiveness to adherend at high temperatures) of the aqueous dispersion and ease of melting when adhering with a hot press.

Polyolefin which is the basic skeleton of component (A) and component (B) (i.e., polyolefin skeleton not modified with an α,β-unsaturated carboxylic acid and/or a derivative thereof) may be a homopolymer or a copolymer.

Examples of the homopolymer include a homopolymer of an α-olefin having 2 - 20 carbon atoms. Examples of the α-olefin having 2 - 20 carbon atoms include ethylene, propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene and the like. Among these, ethylene, propylene and 1-butene are preferred.

Examples of the copolymer include a copolymer of α-olefins having 2 - 20 carbon atoms, and a copolymer of an α-olefin having 2 - 20 carbon atoms and other monomer. Examples of other monomer include cyclic olefin, vinyl aromatic compound, polyene compound and the like.

Examples of the cyclic olefin include norbornene, 5-methylnorbornene, 5-ethylnorbornene, 5-propylnorbornene, 5,6-dimethylnorbornene, 1-methylnorbornene, 7-methylnorbornene, 5,5,6-trimethylnorbornene, 5-phenylnorbornene, 5-benzylnorbornene, 5-ethylidenenorbornene, 5-vinylnorbornene, 1,4,5,8-dimethano-1,2,3,4,4a,5,8,8a-octahydronaphthalene, 2-methyl-1,4,5,8-dimethano-1,2,3,4,4a,5,8,8a-octahydronaphthalene, 2-ethyl-1,4,5,8-dimethano-1,2,3,4,4a,5,8,8a-octahydronaphthalene, 2,3-dimethyl-1,4,5,8-dimethano-1,2,3,4,4a,5,8,8a-octahydronaphthalene, 2-hexyl-1,4,5,8-dimethano-1,2,3,4,4a,5,8,8a-octahydronaphthalene, 2-ethylidene-1,4,5,8-dimethano-1,2,3,4,4a,5,8,8a-octahydronaphthalene, 2-fluoro-1,4,5,8-dimethano-1,2,3,4,4a,5,8,8a-octahydronaphthalene, 1,5-dimethyl-1,4,5,8-dimethano-1,2,3,4,4a,5,8,8a-octahydronaphthalene, 2-cyclohexyl-1,4,5,8-dimethano-1,2,3,4,4a,5,8,8a-octahydronaphthalene, 2,3-dichloro-1,4,5,8-dimethano-1,2,3,4,4a,5,8,8a-octahydronaphthalene, 2-isobutyl-1,4,5,8-dimethano-1,2,3,4,4a,5,8,8a-octahydronaphthalene, 1,2-dihydrodicyclopentadiene, 5-chloronorbornene, 5,5-dichloronorbornene, 5-fluoronorbornene, 5,5,6-trifluoro-6-trifluoromethylnorbornene, 5-chloromethylnorbornene, 5-methoxynorbornene, 5,6-dicarboxylnorbornene anhydrate, 5-dimethylaminonorbornene, 5-cyanonorbornene, cyclopentene, 3-methylcyclopentene, 4-methylcyclopentene, 3,4-dimethylcyclopentene, 3,5-dimethylcyclopentene, 3-chlorocyclopentene, cyclohexene, 3-methylcyclohexene, 4-methylcyclohexene, 3,4-dimethylcyclohexene, 3-chlorocyclohexene, cycloheptene, vinylcyclohexane and the like.

Examples of the vinyl aromatic compound include styrene, α-methylstyrene, p-methylstyrene, vinylxylene, monochlorostyrene, dichlorostyrene, monobromostyrene, dibromostyrene, fluorostyrene, p-tert-butylstyrene, ethylstyrene, vinylnaphthalene and the like.

As the polyene compound, a conjugated polyene compound and an unconjugated polyene compound can be mentioned. Examples of the conjugated polyene compound include aliphatic conjugated polyene compounds such as linear aliphatic conjugated polyene compound, branched aliphatic conjugated polyene compound, alicyclic conjugated polyene compound and the like. Examples of the unconjugated polyene compound include aliphatic unconjugated polyene compound, alicyclic unconjugated polyene compound and the like. In addition, aromatic polyene compound and the like can also be recited as the polyene compound. These polyene compounds may have alkoxy group, aryl group, aryloxy group, aralkyl group, aralkyloxy group and the like.

Examples of the aliphatic conjugated polyene compound include 1,3-butadiene, isoprene, 2-ethyl-1,3-butadiene, 2-propyl-1,3-butadiene, 2-isopropyl-1,3-butadiene, 2-hexyl-1,3-butadiene, 2,3-dimethyl-1,3-butadiene, 2,3-diethyl-1,3-butadiene, 2-methyl-1,3-pentadiene, 2-methyl-1,3-hexadiene, 2-methyl-1,3-octadiene, 2-methyl-1,3-decadiene, 2,3-dimethyl-1,3-pentadiene, 2,3-dimethyl-1,3-hexadiene, 2,3-dimethyl-1,3-octadiene, 2,3-dimethyl-1,3-decadiene and the like.

Examples of the alicyclic conjugated polyene compound include 2-methyl-1,3-cyclopentadiene, 2-methyl-1,3-cyclohexadiene, 2,3-dimethyl-1,3-cyclopentadiene, 2,3-dimethyl-1,3-cyclohexadiene, 2-chloro-1,3-butadiene, 2,3-dichloro-1,3-butadiene, 1-fluoro-1,3-butadiene, 2-chloro-1,3-pentadiene, 2-chloro-1,3-cyclopentadiene, 2-chloro-1,3-cyclohexadiene and the like.

Examples of the aliphatic unconjugated polyene compound include 1,4-hexadiene, 1,5-hexadiene, 1,6-heptadiene, 1,6-octadiene, 1,7-octadiene, 1,8-nonadiene, 1,9-decadiene, 1,13-tetradecadiene, 1,5,9-decatriene, 3-methyl-1,4-hexadiene, 4-methyl-1,4-hexadiene, 5-methyl-1,4-hexadiene, 4-ethyl-1,4-hexadiene, 3-methyl-1,5-hexadiene, 3,3-dimethyl-1,4-hexadiene, 3,4-dimethyl-1,5-hexadiene, 5-methyl-1,4-heptadiene, 5-ethyl-1,4-heptadiene, 5-methyl-1,5-heptadiene, 6-methyl-1,5-heptadiene, 5-ethyl-1,5-heptadiene, 3-methyl-1,6-heptadiene, 4-methyl-1,6-heptadiene, 4,4-dimethyl-1,6-heptadiene, 4-ethyl-1,6-heptadiene, 4-methyl-1,4-octadiene, 5-methyl-1,4-octadiene, 4-ethyl-1,4-octadiene, 5-ethyl-1,4-octadiene, 5-methyl-1,5-octadiene, 6-methyl-1,5-octadiene, 5-ethyl-1,5-octadiene, 6-ethyl-1,5-octadiene, 6-methyl-1,6-octadiene, 7-methyl-1,6-octadiene, 6-ethyl-1,6-octadiene, 6-propyl-1,6-octadiene, 6-butyl-1,6-octadiene, 4-methyl-1,4-nonadiene, 5-methyl-1,4-nonadiene, 4-ethyl-1,4-nonadiene, 5-ethyl-1,4-nonadiene, 5-methyl-1,5-nonadiene, 6-methyl-1,5-nonadiene, 5-ethyl-1,5-nonadiene, 6-ethyl-1,5-nonadiene, 6-methyl-1,6-nonadiene, 7-methyl-1,6-nonadiene, 6-ethyl-1,6-nonadiene, 7-ethyl-1,6-nonadiene, 7-methyl-1,7-nonadiene, 8-methyl-1,7-nonadiene, 7-ethyl-1,7-nonadiene, 5-methyl-1,4-decadiene, 5-ethyl-1,4-decadiene, 5-methyl-1,5-decadiene, 6-methyl-1,5-decadiene, 5-ethyl-1,5-decadiene, 6-ethyl-1,5-decadiene, 6-methyl-1,6-decadiene, 6-ethyl-1,6-decadiene, 7-methyl-1,6-decadiene, 7-ethyl-1,6-decadiene, 7-methyl-1,7-decadiene, 8-methyl-1,7-decadiene, 7-ethyl-1,7-decadiene, 8-ethyl-1,7-decadiene, 8-methyl-1,8-decadiene, 9-methyl-1,8-decadiene, 8-ethyl-1,8-decadiene, 6-methyl-1,6-undecadiene, 9-methyl-1,8-undecadiene, 6,10-dimethyl-1,5,9-undecatriene, 5,9-dimethyl-1,4,8-decatriene, 4-ethylidene-8-methyl-1,7-nonadiene, 13-ethyl-9-methyl-1,9,12-pentadecatriene, 5,9,13-trimethyl-1,4,8,12-tetradecadiene, 8,14,16-trimethyl-1,7,14-hexadecatriene, 4-ethylidene-12-methyl-1,11-pentadecadiene and the like.

Examples of the alicyclic unconjugated polyene compound include vinylcyclohexene, 5-vinyl-2-norbornene, 5-ethylidene-2-norbornene, 5-methylene-2-norbornene, 5-isopropenyl-2-norbornene, cyclohexadiene, dicyclopentadiene, cyclooctadiene, 2,5-norbornadiene, 2-methyl-2,5-norbornadiene, 2-ethyl-2,5-norbornadiene, 2,3-diisopropylidene-5-norbornene, 2-ethylidene-3-isopropylidene-5-norbornene, 6-chloromethyl-5-isopropenyl-2-norbornene, 1,4-divinylcyclohexane, 1,3-divinylcyclohexane, 1,3-divinylcyclopentane, 1,5-divinylcyclooctane, 1-allyl-4-vinylcyclohexane, 1,4-diallylcyclohexane, 1-allyl-5-vinylcyclooctane, 1,5-diallylcyclooctane, 1-allyl-4-isopropenylcyclohexane, 1-isopropenyl-4-vinylcyclohexane, 1-isopropenyl-3-vinylcyclopentane, methyltetrahydroindene and the like.

Examples of the aromatic polyene compound include divinylbenzene, vinylisopropenylbenzene and the like.

Polyolefin which is the basic skeleton of component (A) and component (B) is preferably a copolymer of α-olefins having 2 - 20 carbon atoms, more preferably a copolymer of a copolymer of an α-olefin having 2 - 20 carbon atoms other than propylene and propylene.

Polyolefin which is the basic skeleton of component (A) is further preferably an ethylene-propylene copolymer and/or a propylene-1-butene copolymer, further more preferably an ethylene-propylene copolymer or a propylene-1-butene copolymer. Polyolefin which is the basic skeleton of component (B) is further preferably an ethylene-propylene copolymer and/or an ethylene-propylene-1-butene copolymer, further more preferably an ethylene-propylene copolymer or an ethylene-propylene-1-butene copolymer, particularly preferably an ethylene-propylene copolymer.

In the following, the constitutional unit derived from ethylene in these copolymers is sometimes abbreviated as "ethylene unit". Other constitutional units are sometimes abbreviated similarly.

The amount of the propylene units in the ethylene-propylene copolymer which is the basic skeleton is preferably not less than 50 mol%, more preferably not less than 70 mol%, further preferably not less than 80 mol%, preferably not more than 99 mol%, more preferably not more than 95 mol%, further preferably not more than 90 mol%, based on the total of the ethylene units and propylene units from the aspect of the adhesiveness to polypropylene.

The amount of the propylene units in the 1-butene-propylene copolymer which is the basic skeleton is preferably not less than 50 mol%, more preferably not less than 60 mol%, further preferably not less than 70 mol%, preferably not more than 99 mol%, more preferably not more than 95 mol%, further preferably not more than 90 mol%, based on the total of the propylene units and 1-butene units from the aspect of the adhesiveness to polypropylene.

The amount of the propylene units in the ethylene-propylene-1-butene copolymer which is the basic skeleton is preferably not less than 40 mol%, more preferably not less than 50 mol%, further preferably not less than 55 mol%, preferably not more than 99 mol%, more preferably not more than 70 mol%, further preferably not more than 60 mol%, based on the total of the ethylene units, propylene units and 1-butene units from the aspect of the adhesiveness to polypropylene.

The production methods of component (A) and component (B) are not particularly limited. For example, component (A) and component (B) can be produced by a known method described in patent document 1, or according to the method described in the below-mentioned Examples, or by adding an $\alpha,\beta$-unsaturated carboxylic acid and/or a derivative thereof to a polyolefin.

The aqueous dispersion of the present invention may contain other components different from water (dispersion medium), component (A) or component (B), as long as the effect thereof is not impaired. Examples of other component include basic compound, crosslinking agent, polymer different from component (A) or component (B), organic solvent (dispersion medium), leveling agent, viscosity modifier, stabilizer, filler, pigment, pigment dispersing agent, dye, antifoaming agent, weathering agent, antistatic agent, lubricant, nucleating agent, flame retardant, oil and the like. Only one kind of other component may be used, or two or more kinds thereof may be used in combination.

Examples of the basic compound include ammonia, amine, metal hydroxide and the like.

Examples of the amine include triethylamine, N,N-dimethylethanolamine, aminoethanolamine, N-methyl-N,N-diethanolamine, isopropylamine, imino-bis-propylamine, ethylamine, diethylamine, 3-ethoxypropylamine, 3-diethylaminopropylamine, sec-butylamine, propylamine, methylaminopropylamine, 3-methoxypropylamine, monoethanolamine, morpholine, N-methylmorpholine, N-ethylmorpholine and the like.

Examples of the metal hydroxide include lithium hydroxide, potassium hydroxide, sodium hydroxide and the like.

The basic compound is preferably ammonia and/or an amine, more preferably an amine, further preferably an amine with a boiling point of not more than 200°C, particularly preferably N,N-dimethylethanolamine. Using such basic compound, a dispersoid can be favorably dispersed in the aqueous dispersion, and a film or the like superior in water resistance can be formed from the aqueous dispersion.

When a basic compound is used, the content thereof in the aqueous dispersion is preferably not less than 1 part by weight, more preferably not less than 3 parts by weight, further preferably not less than 5 parts by weight, preferably not more than 20 parts by weight, more preferably not more than 15 parts by weight, further preferably not more than 10 parts by weight, per total 100 parts by weight of component (A) and component (B), from the aspects of the dispersibility of the aqueous dispersion and adhesiveness to adherend.

In the present invention, the "crosslinking agent" means a compound capable of forming a crosslinked structure with a polyolefin modified with an $\alpha,\beta$-unsaturated carboxylic acid and/or a derivative thereof. A bifunctional compound capable of forming a crosslinked structure with the aforementioned modified polyolefin having trifunctionality or higher is also encompassed in the "crosslinking agent" in the present invention.

The crosslinking agent is preferably at least one selected from the group consisting of an isocyanate crosslinking agent, a carbodiimide crosslinking agent, an epoxy crosslinking agent, an oxazoline crosslinking agent, an aziridine crosslinking agent, a hydrazide crosslinking agent, a melamine crosslinking agent, a methylol crosslinking agent, an amine crosslinking agent, an alkoxysilane crosslinking agent, a peroxide crosslinking agent, a metal chelate crosslinking agent and a metal alkoxide crosslinking agent, more preferably at least one selected from the group consisting of an isocyanate crosslinking agent, a carbodiimide crosslinking agent and an epoxy crosslinking agent, further preferably an isocyanate crosslinking agent.

Examples of the isocyanate crosslinking agent include diphenylmethane diisocyanate (MDI), tolylene diisocyanate (TDI), hexamethylene diisocyanate (HDI), xylene diisocyanate (XDI) and oligomers or polymers of these.

Specific examples of the isocyanate crosslinking agent include Sumidur 44V20, Sumidur N3200, Sumidur N3300, Desmodur N3400, Desmodur N3600, Desmodur N3900, Bayhydur 304, Bayhydur 305, Bayhydur XP-2655, Bayhydur XP-2487, Bayhydur XP-2547, Bayhydur 3100, Bayhydur 401-70, Desmodur DN, Desmodur DA-L, manufactured by Sumika Covestro Urethane Co., Ltd., and the like.

Specific examples of the carbodiimide crosslinking agent include CARBODILITE SV-02, CARBODILITE V-02, CARBODILITE V-02-L, CARBODILITE V-04, CARBODILITE V-10, CARBODILITE SW-12G, CARBODILITE E-01, CARBODILITE E-02, CARBODILITE E-03A, CARBODILITE E-05, manufactured by Nisshinbo Chemical Inc., and the like.

Specific examples of the epoxy crosslinking agent include DENACOL EX-313, DENACOL EX-252, DENACOL EX-512, DENACOL EX-614, DENACOL EX-614B, DENACOL FCA-677, DENACOL FCA-678, manufactured by Nagase ChemteX Corporation, and the like.

When a crosslinking agent is used, the content thereof in the aqueous dispersion is preferably not less than 1 part by weight, more preferably not less than 2 parts by weight, further preferably not less than 5 parts by weight, preferably not more than 30 parts by weight, more preferably not more than 20 parts by weight, further preferably not more than 15 parts by weight, per 100 parts by weight of the non-volatile content of the aqueous dispersion, from the aspects of adhesiveness (particularly adhesiveness to adherent at high temperatures) of the aqueous dispersion.

Examples of the polymer different from component (A) or component (B) include unmodified polyolefin, tackifier resin and the like.

The unmodified polyolefin may be a homopolymer or a copolymer. Examples of the homopolymer include a homopolymer of an α-olefin having 2 - 20 carbon atoms. Examples of the copolymer include a copolymer of α-olefins having 2 - 20 carbon atoms, and a copolymer of α-olefin(s) having 2 - 20 carbon atoms and other monomer(s). Examples of other monomer include cyclic olefin, vinyl aromatic compound, polyene compound and the like. The explanation of α-olefin having 2 - 20 carbon atoms, other monomer and the like is as described above.

The unmodified polyolefin is preferably a homopolymer or copolymer of α-olefin having 2 - 20 carbon atoms, more preferably a propylene homopolymer and/or a copolymer of an α-olefin having 2 - 20 carbon atoms other than propylene and propylene, still more preferably at least one selected from the group consisting of a propylene homopolymer, an ethylene-propylene copolymer, a propylene-1-butene copolymer and an ethylene-propylene-1-butene copolymer, further preferably at least one selected from the group consisting of a propylene homopolymer, an ethylene-propylene copolymer and a propylene-1-butene copolymer, further more preferably a propylene homopolymer, an ethylene-propylene copolymer, a propylene-1-butene copolymer or an ethylene-propylene-1-butene copolymer, particularly preferably a propylene homopolymer, an ethylene-propylene copolymer or an propylene-1-butene copolymer, most preferably a propylene homopolymer.

The amount of the propylene units in the unmodified ethylene-propylene copolymer is preferably not less than 50 mol%, more preferably not less than 70 mol%, further preferably not less than 80 mol%, preferably not more than 99 mol%, more preferably not more than 95 mol%, further preferably not more than 90 mol%, per the total of the ethylene units and the propylene units, from the aspect of the adhesiveness to polypropylene.

The amount of the propylene units in the unmodified 1-butene-propylene copolymer is preferably not less than 50 mol%, more preferably not less than 60 mol%, further preferably not less than 70 mol%, preferably not more than 99 mol%, more preferably not more than 97 mol%, further preferably not more than 90 mol%, based on the total of the propylene units and 1-butene units, from the aspect of the adhesiveness to polypropylene.

The amount of the propylene units in the unmodified ethylene-propylene-1-butene copolymer is preferably not less than 40 mol%, more preferably not less than 50 mol%, further preferably not less than 55 mol%, preferably not more than 99 mol%, more preferably not more than 70 mol%, further preferably not more than 60 mol%, based on the total of the ethylene units, propylene units and 1-butene units from the aspect of the adhesiveness to polypropylene.

The weight-average molecular weight of the unmodified polyolefin is preferably not less than 30,000, more preferably not less than 50,000, further preferably not less than 150,000, preferably not more than 400,000, more preferably not more than 360,000, further preferably not more than 250,000, from the aspect of the adhesiveness (particularly adhesiveness to adherend at high temperatures) of the aqueous dispersion.

The crystallinity degree of the unmodified polyolefin is preferably not less than 1%, more preferably not less than 12%, further preferably not less than 15%, preferably not more than 55%, more preferably not more than 40%, from the aspect of the adhesiveness (particularly adhesiveness to adherend at high temperatures) of the aqueous dispersion.

The melting point of the unmodified polyolefin is preferably not less than 50°C, more preferably not less than 70°C, preferably not more than 140°C, more preferably not more than 100°C, further preferably not more than 90°C, from the aspect of the adhesiveness (particularly adhesiveness to adherend at high temperatures) of the aqueous dispersion.

When an unmodified polyolefin is used, the content thereof in the aqueous dispersion is preferably not less than 0.1 parts by weight, more preferably not less than 1 part by weight, further preferably not less than 2 parts by weight, preferably not more than 20 parts by weight, more preferably not more than 15 parts by weight, further preferably not more than 10 parts by weight, per total 100 parts by weight of component (A) and component (B), from the aspects of the adhesiveness (particularly adhesiveness to adherend at high temperatures) and the dispersibility of the aqueous dispersion.

Examples of the tackifier resin include rosins, terpene resin and hydrogenated resin thereof, petroleum resin obtained by polymerizing a petroleum fraction having 5 carbon atoms and hydrogenated resin thereof, petroleum resin obtained by polymerizing a petroleum fraction having 9 carbon atoms and hydrogenated resin thereof, modified petroleum resin, coumarone resin, indene resin, chlorinated paraffin and the like.

Examples of the rosins include rosin, polymerized rosin, disproportionated rosin, hydrogenated rosin, maleated rosin, fumarated rosin and these glycerol ester, pentaerythritol ester, methyl ester, triethylene glycol ester, phenol-modified product and ester compound and the like. Examples of the terpene resin include terpene polymer, terpene phenol, β-pinene polymer, aromatic-modified terpene polymer, α-pinene polymer and the like. Examples of the modified petroleum resin include maleic acid-modified petroleum resin, fumaric acid-modified petroleum resin and the like.

Examples of commercially available products of the terpene resin include YS RESIN PX, PXN, YS POLYSTER, MIGHTYACE, YS RESIN TO, YS RESIN TR, CLEARON P, CLEARON M, CLEARON K manufactured by YASUHARA CHEMICAL CO., LTD.; TAMANOL 803L, TAMANOL 901 manufactured by ARAKAWA CHEMICAL INDUSTRIES, LTD.; Terutac 80 manufactured by Nippon Terpene Chemicals, Inc.; and the like. Examples of the commercially available products of a terpene resin emulsion include TAMANOL E-200NT, TAMANOL E100 manufactured by ARAKAWA CHEMICAL INDUSTRIES, LTD., and the like.

Examples of the organic solvent include alcohols such as methanol, ethanol, n-propanol, isopropanol, n-butanol, 2-butanol, isobutanol, t-butanol, cyclohexanol, ethylene glycol, propylene glycol, butanediol, 2-methoxyethanol, 2-ethoxyethanol, 2-butoxyethanol, 2-methoxypropanol, 2-ethoxypropanol, diacetone alcohol and the like, aromatic hydrocarbons such as toluene, xylene and the like, aliphatic hydrocarbons such as hexane, octane, decane and the like, alicyclic aliphatic hydrocarbons such as cyclohexane, methylcyclohexane and the like, halogenated hydrocarbons such as methylene chloride, carbon tetrachloride, chlorobenzene and the like, esters such as methyl acetate, ethyl acetate, propyl acetate, butyl acetate and the like, ketones such as acetone, methyl ethyl ketone, methyl propyl ketone, methyl isobutyl ketone, cyclohexanone and the like, ethers such as dipropyl ether, dibutyl ether, tetrahydrofuran and the like, dimethylformamide, dimethyl sulfoxide and the like.

When an organic solvent is used, the amount thereof to be used is preferably not less than 1 part by weight, more preferably not less than 20 parts by weight, further preferably not less than 50 parts by weight, preferably not more than 300 parts by weight, more preferably not more than 200 parts by weight, further preferably not more than 150 parts by weight, per total 100 parts by weight of component (A) and component (B), from the aspects of the dispersibility of component (A) and component (B).

As the organic solvent, an alcohol and an aromatic hydrocarbon are preferably used in combination, and 2-butanol and toluene are more preferably used in combination.

In an embodiment where an alcohol (particularly 2-butanol) and an aromatic hydrocarbon (particularly toluene) are used in combination as an organic solvent, the total of these amounts to be used is preferably not less than 1 part by weight, more preferably not less than 20 parts by weight, further preferably not less than 50 parts by weight, preferably not more than 300 parts by weight, more preferably not more than 200 parts by weight, further preferably not more than 150 parts by weight, per total 100 parts by weight of component (A) and component (B), from the aspect of the dispersibility of component (A) and component (B). In this embodiment, the weight ratio of the alcohol content and the aromatic hydrocarbon content(alcohol content/aromatic hydrocarbon content) is preferably not less than 5/95, more preferably not less than 10/90, further preferably not less than 20/80, preferably not more than 95/5, more preferably not more than 50/50, further preferably not more than 40/60, from the aspects of the solubility and hydrophilicity of the modified polyolefin.

When an organic solvent is used, it is preferable to remove the organic solvent thereafter by evaporation under reduced pressure or the like. The residual amount of the organic solvent in the aqueous dispersion after removal of the organic solvent is preferably not more than 1 wt%, more preferably not more than 0.1 wt%, further preferably not more than 0.01 wt%.

Examples of the leveling agent include ADEKA COL W-193, ADEKA COL W-287, ADEKA COL W-288, ADEKA COL W-304 manufactured by ADEKA Corporation; BYK-333, BYK-345, BYK-346, BYK-347, BYK-348, BYK-349, BYK-378 manufactured by BYK; NOPCO WET 50, SN WET 366, NOPCO 38-C, SN DISPERSAND 5468, SN DISPERSAND 5034, SN DISPERSAND 5027, SN DISPERSAND 5040, SN DISPERSAND 5020 of SAN NOPCO LIMITED; and the like.

Examples of the viscosity modifier include BYK-420, BYK-425 manufactured by BYK, ADEKA NOL UH-140S, ADEKA NOL UH-420, ADEKA NOL UH-438, ADEKA NOL UH-450VF, ADEKA NOL UH-462, ADEKA NOL UH-472, ADEKA NOL UH-526, ADEKA NOL UH-530, ADEKA NOL UH-540, ADEKA NOL UH-541VF, ADEKA NOL UH-550, ADEKA NOL UH-752 and ADEKA NOL H-756VF manufactured by ADEKA Corporation; SN THICKENER 920, SN THICKENER 922, SN THICKENER 924, SN THICKENER 926, SN THICKENER 929-S, SN THICKENER A-801, SN THICKENER A-806, SN THICKENER A-812, SN THICKENER A-813, SN THICKENER A-818, SN THICKENER 621N, SN THICKENER 636, SN THICKENER 601, SN THICKENER 603, SN THICKENER 612, SN THICKENER 613, SN THICKENER 615, SN THICKENER 618, SN THICKENER 621N, SN THICKENER 630, SN THICKENER 634, SN THICKENER 636 and SN THICKENER 4050 manufactured by SAN NOPCO LIMITED; SHALLOL AN-103P, SHALLOL AN-144P, SHALLOL AH-103P, CELLOGEN 5A, CELLOGEN 6A, CELLOGEN 7A, CELLOGEN PR, CELLOGEN WS-A, CELLOGEN PL-15, CELLOGEN WS-C, CELLOGEN WS-D, BS, CELLOGEN HH-T, CELLOGEN 3H, CELLOGEN 4H, CELLOGEN BSH-6, CELLOGEN BSH-12 and CELLOGEN EP manufactured by DKS Co. Ltd.; and the like.

Examples of the stabilizer include phenol stabilizer, phosphite stabilizer, amine stabilizer, amide stabilizer, anti-aging agent, weathering agent, antisettling agent, antioxidant, heat stabilizer, light stabilizer and the like.

Examples of the filler include glass fiber, carbon fiber, potassium titanate fiber, wollastonite, calcium carbonate, calcium sulfate, talc, glass flake, barium sulfate, clay, kaolin, finely-divided silica, mica, calcium silicate, aluminum hydroxide, magnesium hydroxide, aluminum oxide, magnesium oxide, alumina, Celite and the like.

Examples of the pigment include inorganic pigments such as titanium oxide, carbon black, iron oxide, chrome oxide, iron blue, red oxide, chrome yellow, yellow oxide and the like, azo pigment, anthracene pigment, perinone pigment, perylene pigment, quinacridone pigment, isoindolinone pigment, indigo pigment, phthalocyanine pigment and the like.

Examples of the pigment dispersing agent include aqueous acrylic resins such as Joncryl manufactured by BASF Japan Ltd. and the like; acidic block copolymers such as BYK-190 manufactured by BYK and the like; styrene-maleic acid copolymer; acetylene diol derivatives such as SURFYNOL T324 manufactured by Air Products (Air Product) and the like; watersoluble carboxymethylacetate butyrates such as CMCAB-641-0.5 manufactured by Eastman Chemical and the like, and the like.

The volume-based median size of the dispersoid in the aqueous dispersion is preferably not less than 0.03 $\mu$m, preferably not more than 10 $\mu$m, more preferably not more than 1 $\mu$m, further preferably not more than 0.4 $\mu$m, from the aspect of the physical stability of the aqueous dispersion. The value of the median size is a value measured by a laser diffraction particle size measuring apparatus, as described in the below-mentioned Examples.

The non-volatile content of the aqueous dispersion is preferably not less than 1 wt%, more preferably not less than 5 wt%, further preferably not less than 20 wt%, preferably 40 wt%, more preferably 35 wt%, from the aspects of the physical stability and adhesiveness to adherend of the aqueous dispersion. The value of the non-volatile content here is a value obtained by drying 1 g of an aqueous dispersion placed in an aluminum cup with upper diameter 65 mm, lower diameter 54 mm and depth 23 mm in a blower dryer maintained at 140°C for 30 min to remove volatile components and measuring the weight of the remaining residue.

The aqueous dispersion of the present invention can be produced, for example, by a method including producing component (A) and component (B) by a known method, and dispersing component (A), component (B) and other components as necessary in water and an organic solvent as necessary.

Specific examples of the method for producing the aqueous dispersion of the present invention include the following:

(1) a method for producing an aqueous dispersion by preparing a mixture of water, component (A), component (B) and other components (e.g., organic solvent) as necessary in a reactor, and removing volatile components such as organic solvent and the like from the mixture

(2) a method for producing an aqueous dispersion by melting component (A) and component (B) and other components as necessary in a kneader, and adding water and other components as necessary.

When the mixture is prepared in the above-mentioned method (1), heating may be performed as necessary.

In the aforementioned method (1), a container (preferably closed container and/or pressure resistant container) provided with a heating apparatus and a stirring machine is used as the reactor.

Examples of the kneader used in the aforementioned method (2) include roll mill, kneader, extruder, ink roll, Banbury mixer and the like. The extruder may be any of a single screw extruder and a multi-screw extruder.

As the aforementioned method (2) using an extruder as the kneader, for example, a method including mixing component (A), component (B) and other components as necessary, continuously supplying the obtained mixture from a hopper or a supply port of the extruder, melting and kneading the mixture, further supplying water from at least one supply port provided in a compression zone, a metering zone, a deaeration zone and the like of the extruder, kneading with a screw, and continuously extruding the obtained mixture from the die can be mentioned.

The aqueous dispersion of the present invention is preferably produced by the aforementioned method (1). In the following, a preferable production method for the aqueous dispersion of the present invention is described. However, the present invention is not limited thereto.

The component (A), component (B) and an aromatic hydrocarbon (preferably toluene) as a solvent are mixed, the obtained mixture is heated to dissolve component (A) and the like in the aromatic hydrocarbon. The amount of the aromatic hydrocarbon to be used is preferably not less than 1 part by weight, more preferably not less than 20 parts by weight, further preferably not less than 50 parts by weight, preferably not more than 300 parts by weight, more preferably not more than 200 parts by weight, further preferably not more than 150 parts by weight, per total 100 parts by weight of component (A) and component (B). The heating temperature of the mixture is preferably not less than 60°C, more preferably not less than 90°C, preferably not more than 140°C, more preferably not more than 110°C.

A basic compound (preferably dimethylaminoethanol) is added to the obtained mixture in an amount such that the content of the basic compound in the aqueous dispersion is within the aforementioned range. To the obtained mixture is added a heated alcohol (preferably 2-butanol) aqueous solution with stirring under heating. The temperature of the mixture here is preferably not less than 60°C, more preferably not less than 90°C, preferably not more than 110°C. The rotation speed of the stirring machine is preferably not less than 10 rpm, more preferably not less than 100 rpm, preferably not more than 500 rpm, more preferably not more than 200 rpm. The content of the alcohol in the alcohol aqueous solution is preferably not less than 5 wt%, more preferably not less than 40 wt%, preferably not more than 80 wt%, more preferably not more than 60 wt%. The amount of the alcohol aqueous solution to be used is preferably not less than 1 part by weight, more preferably not less than 20 parts by weight, further preferably not less than 50 parts by weight, preferably not more than 300 parts by weight, more preferably not more than 200 parts by weight, further preferably not more than 150 parts by weight, per total 100 parts by weight of component (A) and component (B). The temperature of the alcohol aqueous solution is preferably not less than 20°C, more preferably not less than 70°C, preferably not more than 100°C, more preferably not more than 95°C.

After addition of the alcohol aqueous solution, the amount of the non-volatile content of the aqueous dispersion may be adjusted as necessary by adding heated water while stirring the obtained mixture under heating. The temperature of the mixture here is preferably not less than 60°C, more preferably not less than 70°C, preferably not more than 100°C, more preferably not more than 95°C. The rotation speed of the stirring machine is preferably not less than 10 rpm, more preferably not less than 100 rpm, preferably not more than 500 rpm, more preferably not more than 200 rpm. The temperature of the heated water is preferably not less than 20°C, more preferably not less than 70°C, preferably not more than 100°C, more preferably not more than 95°C.

It is preferable to remove volatile components such as an organic solvent and the like by evaporation under reduced pressure using an evaporator or the like. Thereafter, the non-volatile content of the obtained aqueous dispersion may be adjusted.

Other components such as crosslinking agent and the like may be added as necessary to the aqueous dispersion obtained as mentioned above. It is preferable to stir the mixture obtained after the addition of the crosslinking agent or the like by using, for example, a planetary centrifugal mixer or the like. Examples of the planetary centrifugal mixer include planetary centrifugal mixer AWATORI RENTARO ARE-310 manufactured by THINKY CORPORATION, and the like. The stirring conditions for the planetary centrifugal mixer are preferably a rotation speed of 400 - 1,200 rpm and a revolution speed of 1,000 - 3,000 rpm.

The present invention also provides an aqueous adhesive containing the aforementioned aqueous dispersion. In the present invention, the aqueous adhesive means an adhesive containing water as a dispersion medium. The aqueous adhesive of the present invention may contain an organic solvent as a dispersion medium.

The aqueous dispersion of the present invention is superior in the adhesiveness (particularly adhesiveness at high temperatures) to polyolefin. Therefore, the aqueous adhesive of the present invention containing the aforementioned aqueous dispersion is particularly useful as an aqueous adhesive for, for example, adhering polyolefin and polyolefin, and adhering polyolefin and other substrate (hereinafter sometimes to be abbreviated as "aqueous adhesive for polyolefin"). The aqueous adhesive of the present invention can also be used for adhering substances other than polyolefin.

The polyolefin to be adhered may be a homopolymer or a copolymer. Examples of the homopolymer include a homopolymer of $\alpha$-olefin having 2 - 20 carbon atoms. Examples of the copolymer include a copolymer of $\alpha$-olefin having 2 - 20 carbon atoms, and a copolymer of $\alpha$-olefin having 2 - 20 carbon atoms and other monomer. Examples of other monomer include cyclic olefin, vinyl aromatic compound, polyene compound and the like. The explanation of $\alpha$-olefin having 2 - 20 carbon atoms, other monomer and the like is as described above. The polyolefin to be adhered is preferably polypropylene.

Other substrate to be adhered is not particularly limited. Examples thereof include acrylic urethane resin, polyamide resin, unsaturated polyester resin, poly(ethylene terephthalate), poly(butylene terephthalate) resin, polycarbonate resin, vinyl chloride resin, polyester resin, polyurethane resin, epoxy resin, (meth)acrylic resin, ABS resin, EVA resin, rubber, glass, paper, wood, woven fabric, knitted fabric, non-woven fabric, metal (e.g., iron, aluminum, copper, nickel, silver, gold, platinum, various alloy), reinforced fiber (e.g., carbon fiber, glass fiber, cellulose fiber), stone and the like.

A method for adhering a substrate (including polyolefin) by using the aqueous dispersion of the present invention is not particularly limited, and a known method can be used. The method for adhering a substrate by using the aqueous dispersion of the present invention is described in the following; however, the present invention is not limited thereto.

The aqueous dispersion of the present invention is applied to one or both of the two substrates to be adhered. The coating method is not particularly limited, and a known method can be used. Examples of the coating method include brush coating, air spray method, airless spray method, gravure roll coating, reverse roll coating, wire bar coating, lip coating, air knife coating, curtain flow coating, spray coating, immersion coating and the like.

The coating amount of the aqueous dispersion is determined by the amount of the non-volatile content thereof. The amount of the non-volatile content is preferably not less than 1 $g/m^2$, more preferably not less than 5 $g/m^2$, preferably not more than 200 $g/m^2$, more preferably not more than 20 $g/m^2$.

It is preferable to heat the substrate coated with the aqueous dispersion in an air atmosphere, thereby volatilizing water to form a coated film. The temperature thereof is preferably not less than 30°C, more preferably not less than 50°C, preferably not more than 200°C, more preferably not more than 100°C, and the time thereof is preferably not less than 1 minute, more preferably not less than 3 minutes, preferably not more than 10 minutes, more preferably not more than 5 minutes.

It is preferable to further heat the laminate having the structure of the "coated film/substrate" after volatilizing the water. The temperature thereof is preferably not less than 60°C, more preferably not less than 80°C, preferably not more than 200°C, more preferably not more than 120°C, and the time thereof is preferably not less than 1 minute, more preferably not less than 3 minutes, preferably not more than 10 minutes, more preferably not more than 5 minutes.

It is preferable to form a laminate having a structure of "substrate/coated film/substrate" by adhering the thus-obtained two laminates having a structure of "coated film/substrate" such that the coating films thereof are in contact with each other, or adhering a laminate having a structure of "coated film/substrate" and other substrate such that the aforementioned coated film and other substrate are in contact with each other, and pressing the laminate. The temperature of the press is preferably not less than 60°C, more preferably not less than 80°C, preferably not more than 150°C, more preferably not more than 120°C. The pressure of the press is preferably not less than 0.01 MPa, more preferably not less than 0.1 MPa, preferably not more than 0.5 MPa, more preferably not more than 0.3 MPa. The time of press is preferably not less than 0.5 minutes, more preferably not less than 1 minute, preferably not more than 10 minutes, more preferably not more than 5 minutes.

The aqueous dispersion of the present invention is also useful as a material for a film or a sheet. In addition, the aqueous dispersion of the present invention is also useful as paint, binder for ink, binder for paint, primer, heat sealing agent, sizing agent for glass fiber, sizing agent for carbon fiber, dispersing agent for cellulose nanofiber, dispersing agent for filler or a material of these.

A coated film and a laminate formed from the aqueous dispersion or aqueous adhesive of the present invention has sufficient property for practical use as a thinned, highly functionalized, large-sized component and materials, and can be used as an industrial part. Therefore, the present invention also provides a coated film and a laminate formed from the aqueous dispersion or aqueous adhesive of the present invention.

Examples of the industrial component include car components such as bumper, instrument panel, trim, garnish and the like; household electric appliance components such as TV case, washing machine tub, refrigerator component, air conditioner component, cleaner component and the like; toiletry components such as toilet seat, toilet seat lid, water tank and the like; components around bathroom such as bathtub, bathroom wall, ceiling, drain pan and the like; and the like.

Examples of the laminate of the present invention include a laminate in which a first substrate, a coated film formed from the aqueous dispersion or the aqueous adhesive of the present invention, and a second substrate are laminated in this order. Since the aqueous dispersion or aqueous adhesive of the present invention is superior in the adhesiveness (particularly, adhesiveness at high temperatures) to polyolefin, the first substrate is preferably polyolefin The coated film may be a single layer or a multi-layer of two or more layers.

The second substrate may be polyolefin or other substrate. Examples of other substrate include acrylic urethane resin, polyamide resin, unsaturated polyester resin, poly(ethylene terephthalate) resin, poly(butylene terephthalate) resin, polycarbonate resin, vinyl chloride resin, polyester resin, polyurethane resin, epoxy resin, (meth)acrylic resin, ABS resin, EVA resin, rubber, glass, paper, wood, woven fabric, knitted fabric, non-woven fabric, metal (e.g., iron, aluminum, copper, nickel, silver, gold, platinum, various alloy), reinforced fiber (e.g., carbon fiber, glass fiber, cellulose fiber), stone and the like.

[Example]

The present invention is explained more specifically in the following by referring to Examples below; however, the present invention is not limited by the following Examples, and appropriate modifications can also be added within the scope compatible with the gist described above and below, all of which are encompassed in the technical scope of the present invention.

Physical property

The physical properties of the unmodified polyolefins used in the following Production Examples and Examples, the modified polyolefins obtained in Production Examples, and the aqueous dispersions obtained in the Examples and Comparative Examples were measured as follows.

(1) Acid value

All acid values described in the present specification are those of the purified modified polyolefins measured by the following procedures.

(a) Purification

First, the modified polyolefins obtained in the Production Examples were purified as follows.

(i) Modified polyolefin (5 g) was added to xylene (125 mL) (xylene 25 mL per 1 g of modified polyolefin), and the obtained mixture was heated at 140°C for 2 hr to dissolve the modified polyolefin.
(ii) The obtained solution was allowed to cool to room temperature, and the solution was added dropwise to acetone (1500 mL) (acetone 300 mL per 1 g of modified polyolefin) to precipitate the modified polyolefin.
(iii) The precipitated modified polyolefin was collected by filtration with 200 mesh nylon, and the recovered modified polyolefin was rinsed with acetone.
When fine modified polyolefin was precipitated when the solution obtained in the above-mentioned (ii) was added dropwise to acetone, and the precipitated modified polyolefin passed through the 200 mesh nylon used in the above-mentioned (iii), the above-mentioned operation (i) was repeated, and methanol was used instead of acetone in the above-mentioned operations (ii) and (iii).
(iv) The recovered modified polyolefin was vacuum dried at 60°C overnight.
(v) According to the amount of the modified polyolefin obtained by the above-mentioned operations (i) - (iv), the above-mentioned operations (i) - (iv) were repeated at the same charge ratio to purify again to obtain the purified modified polyolefin.

(b) Titration of blank solution

(i) A blank solution was prepared by weighing xylene (100 g) and ion-exchanged water (0.1 g) in a beaker and adding several drops of a phenolphthalein indicator.
(ii) A 0.02 mol/L KOH ethanol solution was added dropwise to the blank solution using a burette. The end point was when the color of the solution changed from colorless to red and the red color did not disappear for 1 min, and the titration amount at that time was read.

(c) Titration of sample solution

(i) The purified modified polyolefin (0.2 g), ion-exchanged water (0.1 g) and xylene (100 g) were weighed in an eggplant flask, and the obtained mixture was heated at 150°C for 2 hr to dissolve the modified polyolefin, as well as hydrolyzed acid anhydride structure in the modified polyolefin.
(ii) The obtained solution was allowed to cool to room temperature, and several drops of phenolphthalein indicator were added to prepare a sample solution.
(iii) A 0.02 mol/L KOH ethanol solution was added dropwise to the sample solution using a burette. The end point was when the color of the solution changed from colorless to red and the red color did not disappear for 1 min, and the titration amount at that time was read.
(iv) The acid value was calculated according to the following formula (in the following formula, $F_{KOH}$ is a factor of KOH ethanol solution).

```
acid value (mg KOH/g)
= 56.11 (g/mol) × (F_KOH × (titration amount (mL) to sample
solution - titration amount (mL) to blank solution) × 0.02
(mol/L)/ amount (g) of modified polyolefin
```

(2) Melting point

The melting point of the polyolefin and modified polyolefin was measured under the following conditions and using a differential scanning calorimeter (manufactured by Seiko Instruments (SII), EXSTAR 6000).

(i) A sample (about 5 mg) was heated from room temperature to 200°C at a temperature-rising rate of 30°C/min, and maintained for 5 min after the temperature rise was completed.

(ii) Then the temperature was decreased from at a temperature-decreasing rate of 10°C/min from 200°C to -100°C, and the sample was maintained for 5 min after the temperature rise was completed.

(iii) Then, the temperature was risen from -100°C to 200°C at a temperature-decreasing rate of 10°C/min. The peak top temperature at the melting peak of the crystal observed here was taken as the melting point. When plural melting peaks were observed, the peak top temperature at the melting peak on the lowest temperature side was taken as the melting point.

(3) Weight-average molecular weight (Mw)

Mw of the polyolefin and modified polyolefin was measured by gel permeation chromatography (GPC) under the following conditions.

apparatus: HLC-8121GPC/HT manufactured by Tosoh Corporation column:
(for measurement) two TSK gel GMH-HR-H(S)HT
(for reference) two TSK gel GMH-HR-H(30)
(guard column) one TSK guard column H-HR(S)HT
eluent: ortho-dichlorobenzene
flow: S pump: 1000 μL/min, R pump: 200 μL/min
detector: RI
column temperature: 145°C
injection volume: 300 μL
sample concentration: 1.0 mg/mL
molecular weight standard: polystyrene

(4) Crystallinity degree

The crystallinity degree of the modified polyolefin and polyolefin purified by the operation described in the aforementioned "(1) acid value" was determined using X-ray diffractometer SmartLab manufactured by Rigaku under the following conditions.

pre-treatment etc.:

polyolefins (a-1) - (a-8) and modified polyolefin (C-1): set on sample plate (made from Si) without pre-treatment.
modified polyolefins (A-1) - (A-5) and modified polyolefins (B-1) - (B-4): a part of sample was cut and set on sample cell for transmission measurement.

measurement conditions:

(X-ray tube) CuKa
(optical system) collimated beam
(tube voltage -tube current) 45 kV - 200 mA
(scan range) 5 - 80 deg
(scan step) 0.02 deg
(scan speed) 10 deg/min

(detector) one-dimensional semiconductor detector analysis conditions:
A straight line passing through 10 deg and 32 deg was used as the background.

The peaks with peak positions within the range of 10 deg - 24 deg were analysis targets.
The peak shapes of crystal component and amorphous component were fitted as normal distribution.
The peak position of the amorphous component was fixed at 17.4 deg.
calculation of crystallinity degree:
The crystallinity degree was calculated from the following formula.

crystallinity degree (%)

= 100 × peak area of crystal component/ (peak area of crystal component + peak area of amorphous component)

(5) Particle size

The volume-based median size was measured and calculated as a particle size of the dispersoid in the aqueous dispersion by using a laser diffraction particle size measuring apparatus LA-950V2 manufactured by HORIBA, Ltd. The median size was measured and calculated with the refractive index of the dispersoid being 1.50 and the refractive index of the dispersion medium being 1.33.

Production method of modified polyolefin

The production method of the modified polyolefin used in the below-mentioned Examples and Comparative Examples is explained below.

(Production Example 1)

Polyolefin (a-1) (ethylene-propylene copolymer, ethylene unit amount = 18 mol%, propylene unit amount = 82 mol%, Mw = 334,000, melting point = 54°C, crystallinity degree = 22%) (100 g) and xylene (170 g) were placed in a 1000 ml separable flask provided with a stirring machine, a thermometer, a reflux condenser and a nitrogen gas introducing tube, and the mixture was heated by an oil bath at 140°C under a nitrogen atmosphere with stirring. After the mixture was dissolved, maleic anhydride (1.5 g, 15.3 mmol) and 2-ethylhexyl acrylate (2.8 g, 15.3 mmol) were added under stirring to make the mixture uniform, and di-t-butylperoxide (0.08 g) was added. This addition operation of maleic anhydride, 2-ethylhexyl acrylate and di-t-butylperoxide was performed 5 times in total every 30 min. The mixture was reacted for 2 hr while keeping at 140°C, and the mixture was heated by an oil bath at 170°C, and low-molecular volatile substances such as xylene, and unreacted maleic anhydride and 2-ethylhexyl acrylate were removed while depressurizing the inside of the flask with an aspirator. After completion of depressurizing, the resultant product was taken out and cooled to give modified polyolefin (A-1) as a solid (acid value = 7 mg KOH/g, Mw = 227,000, melting point = 58°C, crystallinity degree = 24%).

(Production Example 2)

Polyolefin (a-2) (ethylene-propylene copolymer, ethylene unit amount = 18 mol%, propylene unit amount = 82 mol%, Mw = 152,000, melting point = 57°C, crystallinity degree = 28%) (100 g) which was obtained by thermally decomposing polyolefin (a-1) and xylene (50 g) were placed in a 1000 ml separable flask provided with a stirring machine, a thermometer, a reflux condenser and a nitrogen gas introducing tube, and the mixture was heated by an oil bath at 170°C under a nitrogen atmosphere with stirring. After the mixture was dissolved, maleic anhydride (2.0 g, 20.4 mmol) and 2-ethylhexyl acrylate (3.8 g, 20.4 mmol) were added under stirring to make the mixture uniform, and di-t-butylperoxide (0.1 g) was added. This addition operation of maleic anhydride, 2-ethylhexyl acrylate and di-t-butylperoxide was performed 5 times in total every 30 min. The mixture was reacted for 2 hr while keeping at 170°C, and the mixture was heated by an oil bath at 170°C, and low-molecular volatile substances such as xylene, and unreacted maleic anhydride and 2-ethylhexyl acrylate were removed while depressurizing the inside of the flask with an aspirator. After completion of depressurizing, the resultant product was taken out and cooled to give modified polyolefin (A-2) as a solid (acid value = 25 mg KOH/g, Mw = 100,000, melting point = 54°C, crystallinity degree = 28%).

(Production Example 3)

Polyolefin (a-3) (propylene-1-butene copolymer, propylene unit amount = 75 mol%, 1-butene unit amount = 25 mol%, Mw = 335,000, melting point = 78°C, crystallinity degree = 38%) (100 g) and xylene (100 g) were placed in a 1000 ml separable flask provided with a stirring machine, a thermometer, a reflux condenser and a nitrogen gas introducing tube, and the mixture was heated by an oil bath at 140°C under a nitrogen atmosphere with stirring. After the mixture was dissolved, maleic anhydride (2.0 g, 20.4 mmol) and 2-ethylhexyl acrylate (3.8 g, 20.4 mmol) were added under stirring to make the mixture uniform, and di-t-butylperoxide (0.1 g) was added. This addition operation of maleic anhydride, 2-ethylhexyl acrylate and di-t-butylperoxide was performed 5 times in total every 30 min. The mixture was reacted for 2 hr while keeping at 140°C, and the mixture was heated by an oil bath at 170°C, and low-molecular volatile substances such as xylene, and unreacted maleic anhydride and 2-ethylhexyl acrylate were removed while depressurizing the inside of the flask with an aspirator. After completion of depressurizing, the resultant product was taken out and cooled to give modified polyolefin (A-3) as a solid (acid value = 9 mg KOH/g, Mw = 175,000, melting point = 75°C, crystallinity degree = 38%).

(Production Example 4)

Polyolefin (a-4) (propylene-1-butene copolymer, propylene unit amount = 75 mol%, 1-butene unit amount = 25 mol%, Mw = 176,000, melting point = 79°C, crystallinity degree = 43%) (100 g) which was obtained by thermally decomposing polyolefin (a-3) and xylene (50 g) were placed in a 1000 ml separable flask provided with a stirring machine, a thermometer, a reflux condenser and a nitrogen gas introducing tube, and the mixture was heated by an oil bath at 170°C under a nitrogen atmosphere with stirring. After the mixture was dissolved, maleic anhydride (2.0 g, 20.4 mmol) and 2-ethylhexyl acrylate (3.8 g, 20.4 mmol) were added under stirring to make the mixture uniform, and di-t-butylperoxide (0.1 g) was added. This addition operation of maleic anhydride, 2-ethylhexyl acrylate and di-t-butylperoxide was performed 5 times in total every 30 min. The mixture was reacted for 2 hr while keeping at 170°C, and the mixture was heated by an oil bath at 170°C, and low-molecular volatile substances such as xylene, and unreacted maleic anhydride and 2-ethylhexyl acrylate were removed while depressurizing the inside of the flask with an aspirator. After completion of depressurizing, the resultant product was taken out and cooled to give modified polyolefin (A-4) as a solid (acid value = 19 mg KOH/g, Mw = 118,000, melting point = 75°C, crystallinity degree = 38%).

(Production Example 5)

Polyolefin (a-1) (ethylene-propylene copolymer, ethylene unit amount = 18 mol%, propylene unit amount = 82 mol%, Mw = 334,000, melting point = 54°C, crystallinity degree = 22%) (100 g) and xylene (170 g) were placed in a 1000 ml separable flask provided with a stirring machine, a thermometer, a reflux condenser and a nitrogen gas introducing tube, and the mixture was heated by an oil bath at 140°C under a nitrogen atmosphere with stirring. After the mixture was dissolved, maleic anhydride (1.5 g, 15.3 mmol) and butyl acrylate (2.0 g, 15.3 mmol) were added under stirring to make the mixture uniform, and di-t-butylperoxide (0.08 g) was added. This addition operation of maleic anhydride, butyl acrylate and di-t-butylperoxide was performed 5 times in total every 30 min. The mixture was reacted for 2 hr while keeping at 140°C, and the mixture was heated by an oil bath at 170°C, and low-molecular volatile substances such as xylene, and unreacted maleic anhydride and butyl acrylate were removed while depressurizing the inside of the flask with an aspirator. After completion of depressurizing, the resultant product was taken out and cooled to give modified polyolefin (A-5) as a solid (acid value = 6 mg KOH/g, Mw = 199,000, melting point = 53°C, crystallinity degree = 22%).

(Production Example 6)

Polyolefin (a-6) (ethylene-propylene copolymer, ethylene unit amount = 15 mol%, propylene unit amount = 85 mol, Mw = 53,000, melting point = 72°C, crystallinity degree = 27%) (100 g) and propylene glycol-1-monomethyl ether-2-acetate (15 g) were placed in a 1000 ml separable flask provided with a stirring machine, a thermometer, a reflux condenser and a nitrogen gas introducing tube, and the mixture was heated by an oil bath at 170°C under a nitrogen atmosphere with stirring. After the mixture was melted, maleic anhydride (1.2 g, 12.2 mmol) and 2-ethylhexyl acrylate (2.4 g, 13.0 mmol) were added under stirring to make the mixture uniform, and di-t-butylperoxide (0.2 g) was added. This addition operation of maleic anhydride, 2-ethylhexyl acrylate and di-t-butylperoxide was performed 5 times in total every 30 min. The mixture was reacted for 2 hr while keeping at 170°C, and low-molecular volatile substances such as propylene glycol-1-monomethyl ether-2-acetate, and unreacted maleic anhydride and 2-ethylhexyl acrylate were removed while depressurizing the inside of the flask with an aspirator. After completion of depressurizing, the resultant product was taken out and cooled to give modified polyolefin (B-1) as a solid (acid value = 24 mg KOH/g, Mw = 44,000, melting point = 68°C, crystallinity degree = 22%).

(Production Example 7)

By the same method as in Production Example 6 except that polyolefin (a-6) was changed to polyolefin (a-7) (ethylene-propylene copolymer, ethylene unit amount = 13 mol%, propylene unit amount = 87 mol%, Mw = 56,000, melting point = 86°C, crystallinity degree = 35%), modified polyolefin (B-2) was obtained as a solid (acid value = 25 mg KOH/g, Mw = 40,000, melting point = 82°C, crystallinity degree = 30%).

(Production Example 8)

Polyolefin (a-6) (ethylene-propylene copolymer, ethylene unit amount = 15 mol%, propylene unit amount = 85 mol, Mw = 53,000, melting point = 72°C, crystallinity degree = 27%) (100 g) and propylene glycol-1-monomethyl ether-2-acetate (15 g) were placed in a 1000 ml separable flask provided with a stirring machine, a thermometer, a reflux condenser and a nitrogen gas introducing tube, and the mixture was heated by an oil bath at 170°C under a nitrogen atmosphere with stirring. After the mixture was melted, maleic anhydride (2.0 g, 20.3 mmol) and dodecyl acrylate (4.0 g, 16.6 mmol) were added under stirring to make the mixture uniform, and di-t-butylperoxide (0.2 g) was added. This addition operation of maleic anhydride, dodecyl acrylate and di-t-butylperoxide was performed 5 times in total every 30 min. The mixture was reacted for 2 hr while keeping at 170°C, and low-molecular volatile substances such as propylene glycol-1-monomethyl ether-2-acetate, and unreacted maleic anhydride and dodecyl acrylate were removed while depressurizing the inside of the flask with an aspirator. After completion of depressurizing, the resultant product was taken out and cooled to give modified polyolefin (B-3) as a solid (acid value = 37 mg KOH/g, Mw = 45,000, melting point = 65°C, crystallinity degree = 25%).

(Production Example 9)

Polyolefin (a-1) (ethylene-propylene copolymer, ethylene unit amount = 18 mol%, propylene unit amount = 82 mol%, Mw = 334,000, melting point = 54°C, crystallinity degree = 22%) (50 g), polyolefin (a-6) (ethylene-propylene copolymer, ethylene unit amount = 15 mol%, propylene unit amount = 85mol, Mw = 53,000, melting point = 72°C, crystallinity degree = 27%) (50 g) and propylene glycol-1-monomethyl ether-2-acetate (15 g) were placed in a 1000 ml separable flask provided with a stirring machine, a thermometer, a reflux condenser and a nitrogen gas introducing tube, and the mixture was heated by an oil bath at 170°C under a nitrogen atmosphere with stirring. After the mixture was melted, maleic anhydride (4.0 g, 40.8 mmol) and 2-ethylhexyl acrylate (7.5 g, 40.8 mmol) were added under stirring to make the mixture uniform, and di-t-butylperoxide (0.2 g) was added. This addition operation of maleic anhydride, 2-ethylhexyl acrylate and di-t-butylperoxide was performed 5 times in total every 30 min. The mixture was reacted for 2 hr while keeping at 170°C, and low-molecular volatile substances such as propylene glycol-1-monomethyl ether-2-acetate, and unreacted maleic anhydride and 2-ethylhexyl acrylate were removed while depressurizing the inside of the flask with an aspirator. After completion of depressurizing, the resultant product was taken out and cooled to give modified polyolefin (B-4) as a solid (acid value = 43 mg KOH/g, Mw = 52,000, melting point = 70°C, crystallinity degree = 23%).

(Production Example 10)

By the same method as in Production Example 6 except that polyolefin (a-6) was changed to polyolefin (a-9) (ethylene-propylene-1-butene copolymer, ethylene unit amount = 20 mol%, propylene unit amount = 56 mol%, 1-butene unit amount = 24 mol%, Mw = 108,000, melting point = 63°C, crystallinity degree = 17%), modified polyolefin (B-5) was obtained as a solid (acid value = 28 mg KOH/g, Mw = 67,000, melting point = 65°C, crystallinity degree = 18%).

(Production Example 11)

By the same method as in Production Example 3 except that polyolefin (a-3) was changed to polyolefin (a-5) (propylene-1-butene copolymer, propylene unit amount = 96 mol%, 1-butene unit amount = 4 mol %, Mw = 341,000, no melting point, crystallinity degree = 0%), modified polyolefin (C-1) was obtained as a solid (acid value = 13 mg KOH/g, Mw = 145,000, no melting point, crystallinity degree = 0%).

The modified polyolefins (A-1) - (A-5) produced as described above correspond to component (A) of the present invention, modified polyolefins (B-1) - (B-5) correspond to component (B) of the present invention, and modified polyolefin (C-1) is a modified polyolefin that does not correspond to both component (A) and (B) (crystallinity degree of modified polyolefin (C-1) does not fulfill the requirements of component (A), and the weight-average molecular weight (Mw) thereof does not fulfill the requirements of component (B)).

The kind and the like of the unmodified polyolefins used in the aforementioned Production Examples and the below-mentioned Examples are shown in Table 1, polyolefins used in the production of modified polyolefins and the compounds for modification, and the acid value and the like of the obtained modified polyolefins are shown in Table 2.

[Table 1]

| polyolefin | kind | ethylene unit amount (mol%) | propylene unit amount (mol%) | 1-butene unit amount (mol%) | Mw | melting point (°C) | crystallinity degree (%) |
|---|---|---|---|---|---|---|---|
| (a-1) | ethylene-propylene copolymer | 18 | 82 | - | 334,000 | 54 | 22 |
| (a-2) | ethylene-propylene copolymer | 18 | 82 | - | 152,000 | 57 | 28 |
| (a-3) | propylene-1-butene copolymer | - | 75 | 25 | 335,000 | 78 | 38 |
| (a-4) | propylene-1-butene copolymer | - | 75 | 25 | 176,000 | 79 | 43 |
| (a-5) | propylene-1-butene copolymer | - | 96 | 4 | 341,000 | none | 0 |
| (a-6) | ethylene-propylene copolymer | 15 | 85 | - | 53,000 | 72 | 27 |
| (a-7) | ethylene-propylene copolymer | 13 | 87 | - | 56,000 | 86 | 35 |
| (a-8) | propylene homopolymer | - | 100 | - | 234,000 | 81 | 34 |
| (a-9) | ethylene-propylene-1-butene copolymer | 20 | 56 | 24 | 108,000 | 63 | 17 |

[Table 2]

| modified polyolefin | polyolefin | compound for modification | acid value (mg KOH/g) | Mw | melting point (°C) | crystallinity degree (%) |
|---|---|---|---|---|---|---|
| (A-1) | (a-1) | maleic anhydride 2-ethylhexyl acrylate | 7 | 227,000 | 58 | 24 |
| (A-2) | (a-2) | maleic anhydride 2-ethylhexyl acrylate | 25 | 100,000 | 54 | 28 |
| (A-3) | (a-3) | maleic anhydride 2-ethylhexyl acrylate | 9 | 175,000 | 75 | 38 |
| (A-4) | (a-4) | maleic anhydride 2-ethylhexyl acrylate | 19 | 118,000 | 75 | 38 |
| (A-5) | (a-1) | maleic anhydride butyl acrylate | 6 | 199,000 | 53 | 22 |
| (B-1) | (a-6) | maleic anhydride 2-ethylhexyl acrylate | 24 | 44,000 | 68 | 22 |
| (B-2) | (a-7) | maleic anhydride 2-ethylhexyl acrylate | 25 | 40,000 | 82 | 30 |
| (B-3) | (a-6) | maleic anhydride dodecyl acrylate | 37 | 45,000 | 65 | 25 |

(continued)

| modified polyolefin | polyolefin | compound for modification | acid value (mg KOH/g) | Mw | melting point (°C) | crystallinity degree (%) |
|---|---|---|---|---|---|---|
| (B-4) | (a-1) (a-6) | maleic anhydride 2-ethylhexyl acrylate | 43 | 52,000 | 70 | 23 |
| (B-5) | (a-9) | maleic anhydride 2-ethylhexyl acrylate | 28 | 67,000 | 65 | 18 |
| (C-1) | (a-5) | maleic anhydride 2-ethylhexyl acrylate | 13 | 145,000 | none | 0 |

Production of aqueous dispersion

(Example 1: production of aqueous dispersion (F-1))

Modified polyolefin (A-1) (90 g), modified polyolefin (B-1) (10 g), and toluene (100 g) were placed in a 1000 ml separable flask provided with a stirring machine, a thermometer and a reflux condenser, the mixture was dissolved using an oil bath at 100°C, after which N,N-dimethylaminoethanol (10 g) as a base, LATEMUL E-1000A (emulsifier manufactured by Kao Corporation, non-volatile content = 30 wt%) (3.3 g) (non-volatile content = 1.0 g), and NOIGEN EA-177 (emulsifier manufactured by DKS Co. Ltd., non-volatile content = 100 wt%) (1 g) were added and mixed. The obtained mixture was heated to 95°C, and 50 wt% 2-butanol aqueous solution at 80°C was added by small amounts to total 100 g with stirring at a rotation speed of 100 - 150 rpm. Thereafter, ion-exchanged water at 80°C was added by small amounts. Ion-exchanged water (200 g) was added, the mixture was taken out from the flask, and toluene and 2-butanol were removed using an evaporator. Thereafter, ion-exchanged water was added to adjust the non-volatile content to give aqueous dispersion (F-1) (non-volatile content = 29 wt%, volume-based median size of dispersoid = 9.71 $\mu$m).

(Example 2: Production of aqueous dispersion (F-2))

Modified polyolefin (A-1) (80 g), modified polyolefin (B-1) (20 g), and toluene (100 g) were placed in a 1000 ml separable flask provided with a stirring machine, a thermometer and a reflux condenser, the mixture was dissolved using an oil bath at 100°C, after which N,N-dimethylaminoethanol (10 g) as a base was added and mixed. The obtained mixture was heated to 95°C, and 50 wt% 2-butanol aqueous solution at 80°C was added by small amounts to total 100 g with stirring at a rotation speed of 100 rpm - 150 rpm. Thereafter, ion-exchanged water at 80°C was added by small amounts. Ion-exchanged water (200 g) was added, the mixture was taken out from the flask, and toluene and 2-butanol were removed using an evaporator. Thereafter, ion-exchanged water was added to adjust the non-volatile content to give aqueous dispersion (F-2) (non-volatile content = 28 wt%, volume-based median size of dispersoid = 0.24 $\mu$m).

(Examples 3 and 4: Production of aqueous dispersions (F-3) and (F-4))

In the same manner as in Example 2 except that component (A), component (B) and N,N-dimethylaminoethanol were used in the amounts shown in the following Table, aqueous dispersions (F-3) and (F-4) were obtained.
The non-volatile contents of aqueous dispersions (F-3) and (F-4) and the volume-based median sizes of dispersoids are described below.

aqueous dispersion (F-3): non-volatile content = 28 wt%, volume-based median size of dispersoid = 0.25 $\mu$m
aqueous dispersion (F-4): non-volatile content = 27 wt%, volume-based median size of dispersoid = 0.15 $\mu$m

(Comparative Examples 1 and 2: Production of aqueous dispersions (F-5) and (F-6))

In the same manner as in Example 2 except that component (A), component (B) and N,N-dimethylaminoethanol were used in the amounts shown in the following Table,, aqueous dispersions (F-5) and (F-6) were obtained.
The non-volatile contents of aqueous dispersions (F-5) and (F-6) and the volume-based median sizes of dispersoids are described below.

aqueous dispersion (F-5): non-volatile content = 29 wt%, volume-based median size of dispersoid = 0.15 $\mu$m
aqueous dispersion (F-6): non-volatile content = 31 wt%,

volume-based median size of dispersoid = 0.21 μm

(Comparative Example 3: Production of aqueous dispersion (F-7))

Modified polyolefin (B-1) (100 g) and 2-butanol (40 g) were placed in a 1000 ml separable flask provided with a stirring machine, a thermometer and a reflux condenser, the mixture was dissolved using an oil bath at 100°C, after which N,N-dimethylaminoethanol (6 g) as a base was added and mixed. The obtained mixture was heated to 95°C, and ion-exchanged water at 80°C was added by small amounts with stirring at a rotation speed of 100 - 150 rpm. Ion-exchanged water (200 g) was added, the mixture was taken out from the flask, and 2-butanol was removed using an evaporator. Thereafter, ion-exchanged water was added to adjust the non-volatile content to give aqueous dispersion (F-7) (non-volatile content = 31 wt%, volume-based median size of dispersoid = 0.07 μm).

(Comparative Example 4: Production of aqueous dispersion (F-8))

Modified polyolefin (A-2) (100 g) and toluene (150 g) were placed in a 1000 ml separable flask provided with a stirring machine, a thermometer and a reflux condenser, the mixture was dissolved using an oil bath at 100°C, after which N,N-dimethylaminoethanol (10 g) as a base was added and mixed. The obtained mixture was heated to 95°C, and 50 wt% 2-butanol aqueous solution at 80°C was added by small amounts to total 100 g with stirring at a rotation speed of 100 - 150 rpm. Thereafter, ion-exchanged water at 80°C was added by small amounts. Ion-exchanged water (200 g) was added, the mixture was taken out from the flask, and toluene and 2-butanol were removed using an evaporator. Thereafter, ion-exchanged water was added to adjust the non-volatile content to give aqueous dispersion (F-9). The obtained aqueous dispersion (F-8) was unstable due to aggregation of modified polyolefin (A-2).

(Comparative Example 5: Production of aqueous dispersion (F-9))

Modified polyolefin (A-2) (100 g) and toluene (150 g) were placed in a 1000 ml separable flask provided with a stirring machine, a thermometer and a reflux condenser, the mixture was dissolved using an oil bath at 100°C, after which N,N-dimethylaminoethanol (10 g) as a base, LATEMUL E-1000A (emulsifier manufactured by Kao Corporation, non-volatile content = 30 wt%) (16.7 g) (non-volatile content = 5.0 g), and NOIGEN EA-177 (emulsifier manufactured by DKS Co. Ltd., non-volatile content = 100 wt%) (5 g) were added and mixed. The obtained mixture was heated to 95°C, and 50 wt% 2-butanol aqueous solution at 80°C was added by small amounts to total 100 g with stirring at a rotation speed of 100 - 150 rpm. Thereafter, ion-exchanged water at 80°C was added by small amounts. Ion-exchanged water (200 g) was added, the mixture was taken out from the flask, and toluene and 2-butanol were removed using an evaporator. Thereafter, ion-exchanged water was added to adjust the non-volatile content to give aqueous dispersion (F-9) (non-volatile content = 27 wt%, volume-based median size of dispersoid = 0.14 μm).

(Example 5: Production of aqueous dispersion (F-10))

In the same manner as in Example 2 except that component (A), component (B) and N,N-dimethylaminoethanol were used in the amounts shown in the following Table, aqueous dispersion (F-10) was obtained (non-volatile content = 29 wt%, volume-based median size of dispersoid = 0.24 μm).

(Example 6: Production of aqueous dispersion (F-11))

Modified polyolefin (A-3) (80 g), modified polyolefin (B-1) (20 g), and toluene (150 g) were placed in a 1000 ml separable flask provided with a stirring machine, a thermometer and a reflux condenser, the mixture was dissolved using an oil bath at 100°C, after which N,N-dimethylaminoethanol (10 g) as a base was added and mixed. The obtained mixture was heated to 95°C, and 50 wt% 2-butanol aqueous solution at 80°C was added by small amounts to total 100 g with stirring at a rotation speed of 100 rpm - 150 rpm. Thereafter, ion-exchanged water at 80°C was added by small amounts. Ion-exchanged water (200 g) was added, the mixture was taken out from the flask, and toluene and 2-butanol were removed using an evaporator. Thereafter, ion-exchanged water was added to adjust the non-volatile content to give aqueous dispersion (F-11) (non-volatile content = 26 wt%, volume-based median size of dispersoid = 0.25 μm).

(Example 7: Production of aqueous dispersion (F-12))

In the same manner as in Example 6 except that component (A), component (B) and N,N-dimethylaminoethanol were used in the amounts shown in the following Table, aqueous dispersion (F-12) was obtained (non-volatile content = 23 wt%, volume-based median size of dispersoid = 5.44 μm).

(Example 8: Production of aqueous dispersion (F-13))

In the same manner as in Example 2 except that component (A), component (B) and N,N-dimethylaminoethanol were used in the amounts shown in the following Table, aqueous dispersion (F-13) was obtained (non-volatile content = 32 wt%, volume-based median size of dispersoid = 7.15 μm).

(Example 9: Production of aqueous dispersion (F-14))

Modified polyolefin (A-1) (90 g), modified polyolefin (B-1) (10 g), polyolefin (a-8) (propylene homopolymer, Mw = 234,000, melting point = 81°C, crystallinity degree = 34%) (2 g), and toluene (100 g) were placed in a separable flask, the mixture was dissolved using an oil bath at 100°C, after which N,N-dimethylaminoethanol (10 g) as a base and mixed. The obtained mixture was heated to 95°C, and 50 wt% 2-butanol aqueous solution at 80°C was added by small amounts to total 100 g with stirring at a rotation speed of 100 - 150 rpm. Thereafter, ion-exchanged water at 80°C was added by small amounts. Ion-exchanged water (200 g) was added, the mixture was taken out from the flask, and volatile components other than ion-exchanged water were removed using an evaporator. Thereafter, ion-exchanged water was added to adjust the non-volatile content to give aqueous dispersion (F-14) (non-volatile content = 28 wt%, volume-based median size of dispersoid = 0.26 μm).

(Example 10: Production of aqueous dispersion (F-15))

In the same manner as in Example 9 except that the amount of polyolefin (a-8) used was changed from 2 g to 10 g, aqueous dispersion (F-15) was obtained (non-volatile content = 27 wt%, volume-based median size of dispersoid = 0.34 μm).

(Comparative Examples 6 and 7: Production of aqueous dispersions (F-16) and (F-17))

In the same manner as in Example 2 except that component (A), component (B), modified polyolefin (C-1), and N,N-dimethylaminoethanol were used in the amounts shown in the following Table, aqueous dispersions (F-16) and (F-17) were obtained.

The non-volatile contents of aqueous dispersions (F-16) and (F-17) and the volume-based median sizes of dispersoids are described below.

aqueous dispersion (F-16): non-volatile content = 23 wt%, volume-based median size of dispersoid = 0.24 μm
aqueous dispersion (F-17): non-volatile content = 26 wt%, volume-based median size of dispersoid = 0.16 μm

(Example 11: Production of aqueous dispersion (F-18))

Modified polyolefin (A-1) (85 g), modified polyolefin (B-1) (15 g), and toluene (100 g) were placed in a 1000 ml separable flask provided with a stirring machine, a thermometer and a reflux condenser, the mixture was dissolved using an oil bath at 100°C, after which N,N-dimethylaminoethanol (10 g) as a base was added and mixed. The obtained mixture was heated to 95°C, and 50 wt% 2-butanol aqueous solution at 80°C was added by small amounts to total 100 g with stirring at a rotation speed of 100 rpm - 150 rpm. Thereafter, ion-exchanged water at 80°C was added by small amounts. Ion-exchanged water (200 g) was added, the mixture was taken out from the flask, and toluene and 2-butanol were removed using an evaporator. Thereafter, ion-exchanged water was added to adjust the non-volatile content to give aqueous dispersion (F-18) (non-volatile content = 24.0 wt%, volume-based median size of dispersoid = 5.35 μm).

The kind of the aqueous dispersions of the aforementioned Examples 1 - 11 and Comparative Examples 1 - 7 (i.e., aqueous dispersions (F-1) - (F-18)), and the kind and amount of component (A) (i.e., modified polyolefins (A-1) - (A-5)), component (B) (i.e., modified polyolefins (B-1) - (B-4)), modified polyolefin (C-1), N,N-dimethylaminoethanol, unmodified polyolefin (i.e., polyolefin (a-8)) and emulsifier are shown in the following Table. The amount of emulsifier listed in the following Table is the amount of non-volatile content.

[Table 3]

|  | Example 1 | Example 2 | Example 3 | Example 4 |
|---|---|---|---|---|
| aqueous dispersion | (F-1) | (F-2) | (F-3) | (F-4) |
| modified polyolefin (A-1) (g) | 90 | 80 | 70 | 60 |
| modified polyolefin (A-2) (g) |  |  |  |  |

(continued)

| | Example 1 | Example 2 | Example 3 | Example 4 |
|---|---|---|---|---|
| modified polyolefin (A-3) (g) | | | | |
| modified polyolefin (A-4) (g) | | | | |
| modified polyolefin (A-5) (g) | | | | |
| modified polyolefin (B-1) (g) | 10 | 20 | 30 | 40 |
| modified polyolefin (B-2) (g) | | | | |
| modified polyolefin (B-3) (g) | | | | |
| modified polyolefin (B-4) (g) | | | | |
| modified polyolefin (C-1) (g) | | | | |
| N,N-dimethylaminoethanol (g) | 10 | 10 | 10 | 10 |
| polyolefin (a-8) (g) | | | | |
| LATEMUL E-1000A (emulsifier) (g) | 1 | | | |
| NOIGEN EA-177 (emulsifier) (g) | 1 | | | |

[Table 4]

| | Comp. Ex. 1 | Comp. Ex. 2 | Comp. Ex. 3 | Comp. Ex. 4 | Comp. Ex. 5 |
|---|---|---|---|---|---|
| aqueous dispersion | (F-5) | (F-6) | (F-7) | (F-8) | (F-9) |
| modified polyolefin (A-1) (g) | 50 | 20 | | | |
| modified polyolefin (A-2) (g) | | | | 100 | 100 |
| modified polyolefin (A-3) (g) | | | | | |
| modified polyolefin (A-4) (g) | | | | | |
| modified polyolefin (A-5) (g) | | | | | |
| modified polyolefin (B-1) (g) | 50 | 80 | 100 | | |
| modified polyolefin (B-2) (g) | | | | | |
| modified polyolefin (B-3) (g) | | | | | |
| modified polyolefin (B-4) (g) | | | | | |
| modified polyolefin (C-1) (g) | | | | | |
| N,N-dimethylaminoethanol (g) | 10 | 10 | 6 | 10 | 10 |
| polyolefin (a-8) (g) | | | | | |
| LATEMUL E-1000A (emulsifier) (g) | | | | | 5 |
| NOIGEN EA-177 (emulsifier) (g) | | | | | 5 |

[Table 5]

| | Example 5 | Example 6 | Example 7 | Example 8 |
|---|---|---|---|---|
| aqueous dispersion | (F-10) | (F-11) | (F-12) | (F-13) |
| modified polyolefin (A-1) (g) | 80 | | | |
| modified polyolefin (A-2) (g) | | | | |
| modified polyolefin (A-3) (g) | | 80 | | |

(continued)

|  | Example 5 | Example 6 | Example 7 | Example 8 |
|---|---|---|---|---|
| modified polyolefin (A-4) (g) |  |  | 80 |  |
| modified polyolefin (A-5) (g) |  |  |  | 80 |
| modified polyolefin (B-1) (g) |  | 20 | 20 |  |
| modified polyolefin (B-2) (g) | 20 |  |  |  |
| modified polyolefin (B-3) (g) |  |  |  | 20 |
| modified polyolefin (B-4) (g) |  |  |  |  |
| modified polyolefin (C-1) (g) |  |  |  |  |
| N,N-dimethylaminoethanol (g) | 10 | 10 | 10 | 10 |
| polyolefin (a-8) (g) |  |  |  |  |
| LATEMUL E-1000A (emulsifier) (g) |  |  |  |  |
| NOIGEN EA-177 (emulsifier) (g) |  |  |  |  |

[Table 6]

|  | Example 9 | Example 10 | Comp. Ex. 6 | Comp. Ex. 7 | Example 11 |
|---|---|---|---|---|---|
| aqueous dispersion | (F-14) | (F-15) | (F-16) | (F-17) | (F-18) |
| modified polyolefin (A-1) (g) | 80 | 80 |  |  | 85 |
| modified polyolefin (A-2) (g) |  |  |  |  |  |
| modified polyolefin (A-3) (g) |  |  |  |  |  |
| modified polyolefin (A-4) (g) |  |  |  |  |  |
| modified polyolefin (A-5) (g) |  |  |  |  |  |
| modified polyolefin (B-1) (g) | 20 | 20 |  | 20 | 15 |
| modified polyolefin (B-2) (g) |  |  |  |  |  |
| modified polyolefin (B-3) (g) |  |  |  |  |  |
| modified polyolefin (B-4) (g) |  |  | 100 |  |  |
| modified polyolefin (C-1) (g) |  |  |  | 80 |  |
| N,N-dimethylaminoethanol (g) | 10 | 10 |  | 10 | 10 |
| polyolefin (a-8) (g) | 2 | 10 |  |  |  |
| LATEMUL E-1000A (emulsifier) (g) |  |  |  |  |  |
| NOIGEN EA-177 (emulsifier) (g) |  |  |  |  |  |

(Example 12: Production of aqueous dispersion (D-1))

Sumidur N3300 (isocyanate crosslinking agent manufactured by Sumika Covestro Urethane Co., Ltd.) was added to aqueous dispersion (F-1) in an amount of 10 parts by weight per 100 parts by weight of the non-volatile content of aqueous dispersion (F-1), and the obtained mixture was stirred by a planetary centrifugal mixer (planetary centrifugal mixer AWATORI RENTARO ARE-310 manufactured by THINKY CORPORATION) under the conditions of rotation speed 800 rpm, revolution speed 2,000 rpm and stirring time 1 min to give aqueous dispersion (D-1) containing the crosslinking agent. The aqueous dispersion (F-1) was used in an amount of 5 g.

(Examples 13 - 15: Production of aqueous dispersions (D-2) - (D-4))

In the same manner as in Example 12 except that aqueous dispersion (F-1) was changed to any of the aqueous dispersions (F-2) - (F-4) shown in the following Table, aqueous dispersions (D-2) - (D-4) containing the crosslinking agent were obtained.

(Comparative Examples 8 - 11: Production of aqueous dispersions (D-5) - (D-8))

In the same manner as in Example 12 except that aqueous dispersion (F-1) was changed to any of the aqueous dispersions (F-5) - (F-7) and (F-9) shown in the following Table, aqueous dispersions (D-5) - (D-8) containing the crosslinking agent were obtained.

(Examples 16 - 20: Production of aqueous dispersions (D-9) - (D-13))

In the same manner as in Example 12 except that aqueous dispersion (F-1) was changed to any of the aqueous dispersions (F-10) and (F-12) - (F-15) shown in the following Table, aqueous dispersions (D-9) - (D-13) containing the crosslinking agent were obtained.

(Comparative Example 12: Production of aqueous dispersion (D-14))

In the same manner as in Example 12 except that aqueous dispersion (F-1) was changed to aqueous dispersion (F-17) shown in the following Table, aqueous dispersion (D-14) containing the crosslinking agent was obtained.

(Example 21: Production of aqueous dispersion (D-15))

In the same manner as in Example 12 except that aqueous dispersion (F-1) was changed to aqueous dispersion (F-18) shown in the following Table, aqueous dispersion (D-15) containing the crosslinking agent was obtained.

(Example 22: Production of aqueous dispersion (D-16))

Sumidur N3300 and CARBODILITE V-02 (carbodiimide crosslinking agent manufactured by Nisshinbo Chemical Inc.) were added to aqueous dispersion (F-2) in the amounts of 10 parts by weight and 2 parts by weight, respectively, per 100 parts by weight of the non-volatile content of aqueous dispersion (F-2), and the obtained mixture was stirred by a planetary centrifugal mixer (planetary centrifugal mixer AWATORI RENTARO ARE-310 manufactured by THINKY CORPORATION) under the conditions of rotation speed 800 rpm, revolution speed 2,000 rpm and stirring time 1 min to give aqueous dispersion (D-16) containing the crosslinking agents. The aqueous dispersion (F-2) was used in an amount of 5 g.

(Example 23: Production of aqueous dispersion (D-17))

Sumidur N3300 and DENACOL EX-313 (epoxy crosslinking agent manufactured by Nagase ChemteX Corporation) were added to aqueous dispersion (F-2) in the amounts of 10 parts by weight and 2 parts by weight, respectively, per 100 parts by weight of the non-volatile content of aqueous dispersion (F-2), and the obtained mixture was stirred by a planetary centrifugal mixer (planetary centrifugal mixer AWATORI RENTARO ARE-310 manufactured by THINKY CORPORATION) under the conditions of rotation speed 800 rpm, revolution speed 2,000 rpm and stirring time 1 min to give aqueous dispersion (D-17) containing the crosslinking agents. The aqueous dispersion (F-2) was used in an amount of 5 g.

(Example 24: Production of aqueous dispersion (D-18))

Desmodur N3400 (isocyanate crosslinking agent manufactured by Sumika Covestro Urethane Co., Ltd.) was added to aqueous dispersion (F-2) in the amount of 10 parts by weight per 100 parts by weight of the non-volatile content of aqueous dispersion (F-2), and the obtained mixture was stirred by a planetary centrifugal mixer (planetary centrifugal mixer AWATORI RENTARO ARE-310 manufactured by THINKY CORPORATION) under the conditions of rotation speed 800 rpm, revolution speed 2,000 rpm and stirring time 1 min to give aqueous dispersion (D-18) containing the crosslinking agent. The aqueous dispersion (F-2) was used in an amount of 5 g.

(Examples 25 and 26: Production of aqueous dispersions (D-19) and (D-20))

In the same manner as in Example 24 except that aqueous dispersion (F-2) was changed to any of the aqueous dispersions (F-11) and (F-14) shown in the following Table, aqueous dispersions (D-19) and (D-20) containing the crosslinking agent were obtained.

(Comparative Example 13: Production of aqueous dispersion (D-21))

In the same manner as in Example 12 except that aqueous dispersion (F-2) was changed to aqueous dispersion (F-16) shown in the following Table, aqueous dispersion (D-21) containing the crosslinking agent was obtained.

(Example 27: Production of aqueous dispersion (D-22))

Desmodur N3400 and DENACOL EX-313 (epoxy crosslinking agent manufactured by Nagase ChemteX Corporation) were added to aqueous dispersion (F-2) in the amounts of 10 parts by weight and 2 parts by weight, respectively, per 100 parts by weight of the non-volatile content of aqueous dispersion (F-2), and the obtained mixture was stirred by a planetary centrifugal mixer (planetary centrifugal mixer AWATORI RENTARO ARE-310 manufactured by THINKY CORPORATION) under the conditions of rotation speed 800 rpm, revolution speed 2,000 rpm and stirring time 1 min to give aqueous dispersion (D-22) containing the crosslinking agents.

The aqueous dispersions (D-1) - (D-22) obtained in the aforementioned Examples 12 - 27 and Comparative Examples 8 - 13, the aqueous dispersions (F-1) - (F-7) and (F-9) - (F-18) used in the production of the aforementioned aqueous dispersions, and the kind and amount (amount per 100 parts by weight of the non-volatile content of the aqueous dispersion) of the crosslinking agent used are shown in the following Tables.

[Table 7]

| | Example 12 | Example 13 | Example 14 | Example 15 | Comp. Ex. 8 | Comp. Ex. 9 |
|---|---|---|---|---|---|---|
| obtained aqueous dispersion | (D-1) | (D-2) | (D-3) | (D-4) | (D-5) | (D-6) |
| aqueous dispersion used | (F-1) | (F-2) | (F-3) | (F-4) | (F-5) | (F-6) |
| Sumidur N3300 (crosslinking agent) (parts) | 10 | 10 | 10 | 10 | 10 | 10 |
| Desmodur N3400 (crosslinking agent) (parts) | | | | | | |
| CARBODILITE V-02 (crosslinking agent) (parts) | | | | | | |
| DENACOL EX-313 (crosslinking agent) (parts) | | | | | | |
| (note) amount of crosslinking agent = amount per 100 parts of non-volatile content of aqueous dispersion parts = parts by weight | | | | | | |

[Table 8]

| | Comp. Ex. 10 | Comp. Ex. 11 | Example 16 | Example 17 | Example 18 | Example 19 |
|---|---|---|---|---|---|---|
| obtained aqueous dispersion | (D-7) | (D-8) | (D-9) | (D-10) | (D-11) | (D-12) |
| aqueous dispersion used | (F-7) | (F-9) | (F-10) | (F-12) | (F-13) | (F-14) |

(continued)

|  | Comp. Ex. 10 | Comp. Ex. 11 | Example 16 | Example 17 | Example 18 | Example 19 |
|---|---|---|---|---|---|---|
| Sumidur N3300 (crosslinking agent) (parts) | 10 | 10 | 10 | 10 | 10 | 10 |
| Desmodur N3400 (crosslinking agent) (parts) |  |  |  |  |  |  |
| CARBODILITE V-02 (crosslinking agent) (parts) |  |  |  |  |  |  |
| DENACOL EX-313 (crosslinking agent) (parts) |  |  |  |  |  |  |
| (note) amount of crosslinking agent = amount per 100 parts of non-volatile content of aqueous dispersion parts = parts by weight | | | | | | |

[Table 9]

|  | Example 20 | Comp. Ex. 12 | Example 21 | Example 22 | Example 23 |
|---|---|---|---|---|---|
| obtained aqueous dispersion | (D-13) | (D-14) | (D-15) | (D-16) | (D-17) |
| aqueous dispersion used | (F-15) | (F-17) | (F-18) | (F-2) | (F-2) |
| Sumidur N3300 (crosslinking agent) (parts) | 10 | 10 | 10 | 10 | 10 |
| Desmodur N3400 (crosslinking agent) (parts) |  |  |  |  |  |
| CARBODILITE V-02 (crosslinking agent) (parts) |  |  |  | 2 |  |
| DENACOL EX-313 (crosslinking agent) (parts) |  |  |  |  | 2 |
| (note) amount of crosslinking agent = amount per 100 parts of non-volatile content of aqueous dispersion parts = parts by weight | | | | | |

[Table 10]

|  | Example 24 | Example 25 | Example 26 | Comp. Ex. 13 | Example 27 |
|---|---|---|---|---|---|
| obtained aqueous dispersion | (D-18) | (D-19) | (D-20) | (D-21) | (D-22) |
| aqueous dispersion used | (F-2) | (F-11) | (F-14) | (F-16) | (F-2) |
| Sumidur N3300 (crosslinking agent) (parts) |  |  |  |  |  |
| Desmodur N3400 (crosslinking agent) (parts) | 10 | 10 | 10 | 10 | 10 |
| CARBODILITE V-02 (crosslinking agent) (parts) |  |  |  |  |  |

(continued)

|  | Example 24 | Example 25 | Example 26 | Comp. Ex. 13 | Example 27 |
|---|---|---|---|---|---|
| DENACOL EX-313 (crosslinking agent) (parts) |  |  |  |  | 2 |
| (note) amount of crosslinking agent = amount per 100 parts of non-volatile content of aqueous dispersion parts = parts by weight | | | | | |

(Example 28: Production of aqueous dispersion (F-19))

Modified polyolefin (A-1) (60 g), modified polyolefin (B-5) (40 g), and toluene (80 g) were placed in a 1000 ml separable flask provided with a stirring machine, a thermometer and a reflux condenser, the mixture was dissolved using an oil bath at 100°C, after which N,N-dimethylaminoethanol (10 g) as a base was added and mixed. The obtained mixture was heated to 95°C, and 50 wt% 2-butanol aqueous solution at 80°C was added by small amounts to total 100 g with stirring at a rotation speed of 100 - 150 rpm. Thereafter, ion-exchanged water at 80°C was added by small amounts. Ion-exchanged water (200 g) was added, the mixture was taken out from the flask, and toluene and 2-butanol were removed using an evaporator. Thereafter, ion-exchanged water was added to adjust the non-volatile content to give aqueous dispersion (F-19) (non-volatile content = 28 wt%, volume-based median size of dispersoid = 0.15 $\mu$m).

(Comparative Example 14: Production of aqueous dispersion (F-20))

Modified polyolefin (B-1) (85 g), polyolefin (a-6) (15 g) and 2-butanol (40 g) were placed in a 1000 ml separable flask provided with a stirring machine, a thermometer and a reflux condenser, the mixture was dissolved using an oil bath at 100°C, after which N,N-dimethylaminoethanol (6 g) as a base was added and mixed. The obtained mixture was heated to 95°C, and ion-exchanged water at 80°C was added by small amounts with stirring at a rotation speed of 100 - 150 rpm. Ion-exchanged water (200 g) was added, the mixture was taken out from the flask, and 2-butanol was removed using an evaporator. Thereafter, ion-exchanged water was added to adjust the non-volatile content to give aqueous dispersion (F-20) (non-volatile content = weight 29%, volume-based median size of dispersoid = 0.10 $\mu$m).

The kind of the aqueous dispersions of the aforementioned Example 28 and Comparative Example 14 (i.e., aqueous dispersion (F-19) and (F-20)), and the kind and amount of the components thereof are shown in the following Table.

[Table 11]

|  | Example 28 | Comp. Ex. 14 |
|---|---|---|
| aqueous dispersion | (F-19) | (F-20) |
| modified polyolefin (A-1) (g) | 60 |  |
| modified polyolefin (B-1) (g) |  | 85 |
| modified polyolefin (B-5) (g) | 40 |  |
| N,N-dimethylaminoethanol (g) | 10 | 10 |
| polyolefin (a-6) (g) |  | 15 |

(Example 29: Production of aqueous dispersion (D-23))

Sumidur N3300 was added to aqueous dispersion (F-19) in the amount of 10 parts by weight per 100 parts by weight of the non-volatile content of aqueous dispersion (F-19), and the obtained mixture was stirred by a planetary centrifugal mixer (planetary centrifugal mixer AWATORI RENTARO ARE-310 manufactured by THINKY CORPORATION) under the conditions of rotation speed 800 rpm, revolution speed 2,000 rpm and stirring time 1 min to give aqueous dispersion (D-23) containing the crosslinking agent.

The aqueous dispersion (D-23) obtained in the aforementioned Example 29, the kind of the aqueous dispersion used for the production thereof (i.e., aqueous dispersion (F-19)), the kind of the crosslinking agent used (i.e., Sumidur N3300) and the amount thereof (amount per 100 parts by weight of the non-volatile content of the aqueous dispersion) are shown in the following Table.

[Table 12]

|  | Example 29 |
|---|---|
| obtained aqueous dispersion | (D-23) |
| aqueous dispersion used | (F-19) |
| Sumidur N3300 (crosslinking agent) (parts) | 10 |
| (note)<br>amount of crosslinking agent = amount per 100 parts of non-volatile content of aqueous dispersion<br>parts = parts by weight | |

Evaluation of aqueous dispersion

(1) Adhesion test of polypropylene plate and polypropylene foam

Using aqueous dispersion (F-2) not containing a crosslinking agent and obtained in Example 2, and aqueous dispersions (D-1) - (D-17) and (D-23) containing the crosslinking agent and obtained in Examples 12 - 23 and 29, and Comparative Examples 8 - 12, an adhesion test of polypropylene plates and polypropylene foams were performed.

To be specific, any of the aforementioned aqueous dispersions was applied using cotton to a polypropylene plate cut to a width of 25 mm such that the amount of the non-volatile content thereof was 20 g/m$^2$. The polypropylene plate coated with the aqueous dispersion was heated at 80°C for 3 min under air atmosphere to volatilize water to form a coated film. Then, the laminate having a structure of the obtained "coated film/polypropylene plate" was heated at 110°C for 5 min under air atmosphere, and then a polypropylene foam cut into a width of 25 mm was adhered such that the coated film was brought into contact with the polypropylene foam. The obtained laminate was hot pressed for 1 min under the conditions of 0.2 MPa and 80°C. The time from the completion of heating of the aforementioned polypropylene plate at 110°C for 5 min to the start of hot pressing was set to 30 seconds. The laminate having a structure of "polypropylene plate/coated film/polypropylene foam" obtained by hot pressing was allowed to stand for 24 hr under atmosphere of 25°C and a relative humidity of 50 RH% to prepare a test piece.

A 180° peel test (ordinary temperature peel test and 80°C peel test) of the test piece obtained as mentioned above was performed under the conditions of peel rate 100 mm/min using a tensile tester, and the peel strength thereof was measured.

The ordinary temperature peel test was performed in a temperature-controlled room at 25°C.

In the 80°C peel test, a tensile tester with a thermostatic chamber was used, a test piece was set in a peel jig in a thermostatic chamber at 80°C, allowed to stand for 10 min, and the 180° peel test was performed after the temperature of the test piece reached 80°C.

As the peel strength obtained in the ordinary temperature peel test and 80°C peel test, the values standardized according to the following formula are shown in the following Tables.

```
ordinary temperature peel strength = 100 × peel strength
(N/25 mm) obtained in ordinary temperature peel test/ 11.9
(N/25 mm)
```

```
80°C peel strength = 100 × peel strength (N/25 mm)
obtained in 80°C peel test/ 11.9 (N/25 mm)
```

[Table 13]

|  | Example 2 | Example 12 | Example 13 | Example 14 | Example 15 |
|---|---|---|---|---|---|
| evaluated aqueous dispersion | (F-2) | (D-1) | (D-2) | (D-3) | (D-4) |

(continued)

| | Example 2 | Example 12 | Example 13 | Example 14 | Example 15 |
|---|---|---|---|---|---|
| ordinary temperature peel strength | ≥300[1] | ≥300[1] | ≥300[1] | ≥300[1] | ≥300[1] |
| 80°C peel strength | 104 | 100 | 146 | 115 | 137 |
| (note) [1] the ordinary temperature peel strength was not less than 300 due to material failure of polypropylene foam | | | | | |

[Table 14]

| | Comp. Ex. 8 | Comp. Ex. 9 | Comp. Ex. 10 | Comp. Ex. 11 |
|---|---|---|---|---|
| evaluated aqueous dispersion | (D-5) | (D-6) | (D-7) | (D-8) |
| ordinary temperature peel strength | ≥300[1] | ≥300[1] | ≥300[1] | ≥300[1] |
| 80°C peel strength | 96 | 73 | 46 | 83 |
| (note) [1] the ordinary temperature peel strength was not less than 300 due to material failure of polypropylene foam | | | | |

[Table 15]

| | Example 16 | Example 17 | Example 18 | Example 19 | Example 20 |
|---|---|---|---|---|---|
| evaluated aqueous dispersion | (D-9) | (D-10) | (D-11) | (D-12) | (D-13) |
| ordinary temperature peel strength | ≥300[1] | ≥300[1] | ≥300[1] | ≥300[1] | ≥300[1] |
| 80°C peel strength | 108 | 171 | 151 | ≥175[2] | ≥175[2] |
| (note) [1] the ordinary temperature peel strength was not less than 300 due to material failure of polypropylene foam [2] 80°C peel strength was not less than 175 due to material failure of polypropylene foam | | | | | |

[Table 16]

| | Comp. Ex. 12 | Example 21 | Example 22 | Example 23 | Example 29 |
|---|---|---|---|---|---|
| evaluated aqueous dispersion | (D-14) | (D-15) | (D-16) | (D-17) | (D-23) |
| ordinary temperature peel strength | ≥300[1] | ≥300[1] | ≥300[1] | ≥300[1] | ≥300[1] |
| 80°C peel strength | 73 | 134 | ≥175[2] | 143 | ≥175[2] |
| (note) [1] the ordinary temperature peel strength was not less than 300 due to material failure of polypropylene foam [2] 80°C peel strength was not less than 175 due to material failure of polypropylene foam | | | | | |

In the aforementioned adhesion test of polypropylene plate and polypropylene foam, the 80°C peel strength in Examples 2, 12 - 23 and 29 was not less than 100, and the adhesiveness at high temperatures was fine. In contrast, the 80°C peel strength in Comparative Examples 8 - 12 was less than 100, and the adhesiveness at high temperatures was not sufficient.

(2) Adhesion test of polypropylene plate and aluminum plate

Using aqueous dispersions (D-18) - (D-22) containing the crosslinking agent that were obtained in Examples 24 - 27 and Comparative Example 13, an adhesion test of polypropylene plate and aluminum plate was performed.
To be specific, any of the aforementioned aqueous dispersions was applied using cotton to a polypropylene plate cut to a width of 25 mm such that the coated amount of the non-volatile content thereof was 10 g/m$^2$ (size of coated

surface: 25 mm × 12.5 mm). The same aqueous dispersion was applied using cotton to an aluminum plate cut to a width of 25 mm such that the coated amount of the non-volatile content thereof was 10 g/m² (size of coated surface: 25 mm × 12.5 mm).

The polypropylene plate and aluminum plate coated with the aqueous dispersion was heated at 60°C for 5 min under air atmosphere to volatilize water to form coated films. a laminate having a structure of "coated film/polypropylene plate" and a laminate having a structure of "coated film/aluminum plate" were adhered such that these coated films were brought into contact with the coated film to give a laminate.

The obtained laminate was hot pressed for 10 min under the conditions of 0.3 MPa and 120°C.

The laminate having a structure of "polypropylene plate/coated film/aluminum plate" obtained by hot pressing was allowed to stand for 24 hr under atmosphere of 25°C and 50 RH% to prepare a test piece.

A shear tensile test (ordinary temperature tensile test and 80°C tensile test) of the test piece obtained as mentioned above was performed under the conditions of tension rate 1 mm/min using a shear tensile tester, and the tensile strength thereof was measured.

The ordinary temperature tensile test was performed in a temperature-controlled room at 25°C.

In the 80°C tensile test, a tensile tester with a thermostatic chamber was used, a test piece was set in a peel jig in the thermostatic chamber at 80°C, allowed to stand for 10 min, and the shear tensile test was performed after the temperature of the test piece reached 80°C.

As the tensile strength obtained in the ordinary temperature tensile test and 80°C tensile test, the values standardized according to the following formula are shown in the following Table.

```
ordinary temperature tensile strength = 100 × tensile
strength (N) obtained in ordinary temperature tensile test/
40.0 (N)
```

```
80°C tensile strength = 100 × tensile strength (N)
obtained in 80°C tensile test/ 40.0 (N)
```

[Table 17]

|  | Example 24 | Example 25 | Example 26 | Comp. Ex. 13 | Example 27 |
|---|---|---|---|---|---|
| evaluated aqueous dispersion | (D-18) | (D-19) | (D-20) | (D-21) | (D-22) |
| ordinary temperature tensile strength | 950 | 1928 | 1743 | 1063 | 978 |
| 80°C tensile strength | 145 | 100 | 245 | 15 | 178 |

In the aforementioned adhesion test of polypropylene plate and aluminum plate, the 80°C tensile strength in Examples 24 - 27 was not less than 100, and the adhesiveness at high temperatures was fine. In contrast, the 80°C tensile strength in Comparative Example 13 was less than 100, and the adhesiveness at high temperatures was not sufficient.

Production of sizing agent

(Example 30: Production of sizing agent (S-1))

The aqueous dispersion (F-2) was diluted with water to produce sizing agent (S-1) which is an aqueous dispersion with a non-volatile content of 3 wt%.

(Example 31 and Comparative Examples 15 and 16: Production of sizing agents (S-2) - (S-4))

In the same manner as in Example 30 except that aqueous dispersion (F-4), (F-7) or (F-20) was used instead of aqueous dispersion (F-2), sizing agents (S-2) - (S-4) were produced that were aqueous dispersions with a non-volatile content of 3 wt%.

Evaluation of sizing agent

The interface shear strength between carbon fiber bundle and polypropylene treated with sizing agents (S-1) - (S-4) obtained in Examples 30 and 31 and Comparative Examples 15 and 16 was measured as follows.

In this evaluation experiment, the following carbon fiber and polypropylene were used.

(1) carbon fiber
carbon fiber bundle TC35R-12k manufactured by Formosa Plastics Corporation (fineness: 800 tex, filament number: 12000)
(2) polypropylene
homo polypropylene: NOBLEN U501E1 manufactured by SUMITOMO CHEMICAL COMPANY, LIMITED (MFR (230°C, 2.16 kg load): 120 g/min, melting point: 162°C)

(washing of carbon fiber)

The aforementioned carbon fiber bundle was immersed in acetone and the carbon fibers were pulled up after action of ultrasonication for 10 min. This acetone washing was performed 3 times in total. Thereafter, the carbon fibers were dried by allowing to stand under atmosphere of 25°C and 50 RH% for 24 hr to give washed carbon fibers (i.e., carbon fibers after removal the sizing agent).

(treatment of carbon fiber with sizing agent)

The washed carbon fibers were immersed in any of the sizing agents (S-1) - (S-4), pulled up, and the carbon fibers with the sizing agent were allowed to stand under atmosphere of 25°C and 50 RH% for 24 hr. Thereafter, they were dried at 140°C for 3 min using a hot air dryer to give a carbon fiber bundle treated with the sizing agent.

(measurement of deposition amount of sizing agent non-volatile content)

The deposition amount of the sizing agent non-volatile content of the carbon fiber bundle treated with the sizing agent was measured by thermogravimetry - differential thermal analysis (TG-DTA) under the following conditions. In this measurement, a weight loss amount (wt%) of the carbon fiber bundle treated with the sizing agent after increasing the temperature from 30°C to 600°C was taken as the deposition amount of the sizing agent non-volatile content. The results are shown in the following Table.

temperature range: 30°C - 600°C
temperature-rising rate: 10°C/min
measurement atmosphere: $N_2$ (flow 100 mL/min)
measurement container: aluminum pan
set temperature: 30°C
sample amount: 10 mg

(measurement method of interface shear strength)

The interface shear strength between carbon fiber treated with the sizing agent and polypropylene was measured by a micro-droplet method using an evaluation equipment for interfacial property of composite material HM410 (manufactured by TOHEI SANGYO CO., LTD).
A carbon fiber filament was taken out from the carbon fiber bundle treated with the sizing agent and set on the evaluation equipment for interfacial property of composite material. Polypropylene melted by applying a heat at 165°C on the equipment was brought into contact with the carbon fiber filament, to form a polypropylene droplet on the carbon fiber filament under 180°C atmosphere. The carbon fiber filament obtained by forming the polypropylene droplet thereon was sufficiently cooled at room temperature to give a measurement sample. The polypropylene droplet was sandwiched between the equipment blades, the carbon fiber filament was pulled out at a speed of 0.12 mm/min on the equipment, and the maximum pullout load F at the time of pulling out the carbon fiber filament from the droplet was measured. The interface shear strength was calculated from the following formula.

$$\text{interface shear strength (MPa)} = F/\pi dl$$

(F: maximum pullout load, $\pi$: circular constant, d: diameter of carbon fiber filament, l: particle size of droplet in the pullout direction)

The results are shown in the following Table.

For reference, the interface shear strength between a carbon fiber subjected only to washing and without the sizing agent treatment thereafter and polypropylene was measured in the same manner as the above (Reference Example 1). In addition, the interface shear strength between a carbon fiber free of both washing and sizing agent treatment thereafter and polypropylene was measured (Reference Example 2). The results are shown in the following Table.

The following Table shows the interface shear strength measured as mentioned above, as well as the kind of the aqueous dispersion used for production of sizing agents (S-1) - (S-4), the presence or absence of carbon fiber washing, and the deposition amount of the sizing agent non-volatile content.

[Table 18]

|  | Example 30 | Example 31 | Comp. Ex. 15 | Comp. Ex. 16 | Ref. Ex. 1 | Ref. Ex. 2 |
|---|---|---|---|---|---|---|
| sizing agent | (S-1) | (S-2) | (S-3) | (S-4) | - | - |
| aqueous dispersion used | (F-2) | (F-4) | (F-7) | (F-20) | - | - |
| washing of carbon fiber | done | done | done | done | done | not done |
| deposition amount (wt%) of non-volatile content of sizing agent | 3.6 | 2.7 | 2.0 | 2.2 | - | - |
| interface shear strength (MPa) | 12 | 15 | 16 | 19 | 7 | 6 |

[Industrial Applicability]

The aqueous dispersion of the present invention is superior in the adhesiveness (particularly adhesiveness at high temperatures) to polyolefin. Therefore, an aqueous adhesive containing the aforementioned aqueous dispersion is useful as, for example, an aqueous adhesive for polyolefin.

This application is based on a patent application No. 2018-160853 filed in Japan, the contents of which are incorporated in full herein.

**Claims**

1. An aqueous dispersion comprising the following component (A) and component (B):

    (A) a polyolefin modified with an $\alpha,\beta$-unsaturated carboxylic acid and/or a derivative thereof, having a weight-average molecular weight of not less than 100,000, a crystallinity degree larger than 10%, and an acid value of 1 - 30 mg KOH/g, and
    (B) a polyolefin modified with an $\alpha,\beta$-unsaturated carboxylic acid and/or a derivative thereof, having a weight-average molecular weight of less than 100,000, and an acid value of 15 - 50 mg KOH/g,

    the dispersion having a mass ratio of a content of the component (A) and a content of the component (B) (content of the component (A)/content of the component (B)) of 55/45 - 95/5.

2. The aqueous dispersion according to claim 1, wherein the component (A) comprises a polyolefin modified with maleic anhydride and an alkyl (meth)acrylate having an alkyl group having 1 - 18 carbon atoms and/or a cycloalkyl (meth)acrylate having a cycloalkyl group having 3 - 18 carbon atoms, and/or a polyolefin modified with maleic anhydride.

3. The aqueous dispersion according to claim 1 or 2, wherein the component (B) comprises a polyolefin modified with maleic anhydride and an alkyl (meth)acrylate having an alkyl group having 1 - 18 carbon atoms and/or a cycloalkyl (meth)acrylate having a cycloalkyl group having 3 - 18 carbon atoms, and/or a polyolefin modified with maleic anhydride.

4. The aqueous dispersion according to any one of claims 1 to 3, wherein the component (B) has a melting point of not more than 100°C.

5. The aqueous dispersion according to any one of claims 1 to 4, further comprising a basic compound.

6. The aqueous dispersion according to claim 5, wherein the basic compound is ammonia and/or an amine.

7. The aqueous dispersion according to any one of claims 1 to 6, further comprising a crosslinking agent.

8. The aqueous dispersion according to claim 7, wherein the crosslinking agent is at least one selected from the group consisting of an isocyanate crosslinking agent, a carbodiimide crosslinking agent and an epoxy crosslinking agent.

9. The aqueous dispersion according to claim 7 or 8, wherein a content of the crosslinking agent is 1 - 30 parts by weight per 100 parts by weight of the non-volatile content of the aqueous dispersion.

10. The aqueous dispersion according to any one of claims 1 to 9, optionally further comprising an emulsifier, wherein a content of the emulsifier is 0 - 8 parts by weight per total 100 parts by weight of the component (A) and component (B).

11. The aqueous dispersion according to any one of claims 1 to 10, wherein a dispersoid in the aqueous dispersion has a volume-based median size of 0.03 - 10 $\mu$m.

12. The aqueous dispersion according to any one of claims 1 to 11, wherein the polyolefin which is a basic skeleton of the component (A) is an ethylene-propylene copolymer and/or a propylene-1-butene copolymer.

13. The aqueous dispersion according to any one of claims 1 to 12, wherein the polyolefin which is a basic skeleton of the component (B) is an ethylene-propylene copolymer and/or an ethylene-propylene-1-butene copolymer.

14. The aqueous dispersion according to any one of claims 1 to 12, wherein the polyolefin which is a basic skeleton of the component (B) is an ethylene-propylene copolymer.

15. The aqueous dispersion according to any one of claims 1 to 14, further comprising an unmodified polyolefin in a content of 0.1 - 20 parts by weight per total 100 parts by weight of the component (A) and component (B).

# EP 3 845 592 A1

| | INTERNATIONAL SEARCH REPORT | International application No. |
|---|---|---|
| | | PCT/JP2019/029922 |

**A. CLASSIFICATION OF SUBJECT MATTER**
Int.Cl.  C08L23/26(2006.01)i,   C08G59/42(2006.01)i,   C08K3/28(2006.01)i,
         C08K5/17(2006.01)i, C08K5/29(2006.01)i

According to International Patent Classification (IPC) or to both national classification and IPC

**B. FIELDS SEARCHED**

Minimum documentation searched (classification system followed by classification symbols)
Int.Cl.  C08L23/00-23/36, C08K3/00-13/08, C08G59/00-59/72

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-25127 A (TOHO CHEMICAL INDUSTRY CO., LTD.) 02 February 2017, claim 1, paragraphs [0017], [0045]-[0054], [0056], [0061], examples 1-12, comparative examples 1-5, table 2 (Family: none) | 1-6, 10-15 |
| X | WO 2004/074353 A1 (MARUYOSHI CHEMICAL CO., LTD.) 02 September 2004, claims 5, 6, page 7, lines 5-7, page 10, line 13 to page 11, line 20, page 12, lines 17-19, page 12, line 20 to page 13, line 1, page 13, lines 2-9, example 2, tables 1, 2 & US 2006/0106151 A1 & EP 1595911 A1, claims 5, 6, paragraphs [0019], [0028]-[0032], example 2, tables 1, 2 & KR 10-2005-0114216 A & CN 1751080 A | 1-6, 10-12, 15 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 October 2019 (24.10.2019) | 05 November 2019 (05.11.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

37

**INTERNATIONAL SEARCH REPORT**

International application No.

PCT/JP2019/029922

C (Continuation).    DOCUMENTS CONSIDERED TO BE RELEVANT

| Category* | Citation of document, with indication, where appropriate, of the relevant passages | Relevant to claim No. |
|---|---|---|
| A | CN 108047560 A (HUBEI HANSHI AUTO PARTS CO., LTD.) 18 May 2018, paragraph [0116] (Family: none) | 1-15 |
| A | EP 1233039 A1 (GX ASSOCIATES INC.) 21 August 2002, paragraph [0044] (Family: none) | 1-15 |
| A | WO 2015/186733 A1 (UNITIKA LTD.) 10 December 2015, claims, examples 8, 11, 12, 14, tables 1-3 (Family: none) | 1-15 |

Form PCT/ISA/210 (continuation of second sheet) (January 2015)

**EP 3 845 592 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017195828 A
- JP 2008303297 A
- JP 2011148871 A